(19) Europäisches Patentamt
European Patent Office
Office européen des brevets

(11) EP 4 317 900 A1

(12) EUROPEAN PATENT APPLICATION
published in accordance with Art. 153(4) EPC

(43) Date of publication:
**07.02.2024 Bulletin 2024/06**

(21) Application number: **22780554.6**

(22) Date of filing: **25.03.2022**

(51) International Patent Classification (IPC):
***F28F 21/06*** (2006.01) ***C08K 5/1539*** (2006.01)
***C08L 15/00*** (2006.01) ***C08L 53/02*** (2006.01)
***C08L 77/00*** (2006.01) ***C08L 81/02*** (2006.01)
***C08L 101/06*** (2006.01) ***C08L 71/12*** (2006.01)
***C08J 5/00*** (2006.01) ***C08G 75/0281*** (2016.01)
***B29C 48/09*** (2019.01) ***F16L 11/04*** (2006.01)

(52) Cooperative Patent Classification (CPC):
**B29C 48/09; C08G 75/0281; C08J 5/00; C08K 5/1539; C08L 15/00; C08L 53/02; C08L 71/12; C08L 77/00; C08L 81/02; C08L 101/06; F16L 11/04; F28F 21/06**

(86) International application number:
**PCT/JP2022/014331**

(87) International publication number:
**WO 2022/210341 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021 JP 2021054868**
**28.10.2021 JP 2021176307**

(71) Applicant: **Toray Industries, Inc.**
**Tokyo 103-8666 (JP)**

(72) Inventors:
- **YAMANAKA, Yuji**
  **Nagoya-shi, Aichi 455-8502 (JP)**
- **YARIMIZU, Ryosuke**
  **Nagoya-shi, Aichi 455-8502 (JP)**
- **UNOHARA, Takeshi**
  **Otsu-shi, Shiga 520-8558 (JP)**
- **HORIUCHI, Syunsuke**
  **Nagoya-shi, Aichi 455-8502 (JP)**

(74) Representative: **Mewburn Ellis LLP**
**Aurora Building**
**Counterslip**
**Bristol BS1 6BX (GB)**

# (54) POLYPHENYLENE SULFIDE RESIN COMPOSITION, MOLDED ARTICLE AND METHOD FOR PRODUCING MOLDED ARTICLE

(57) There is provided a polyphenylene sulfide resin composition obtained by blending a (A) polyphenylene sulfide resin, an (B) amino group-containing resin, an (C) epoxy group-containing elastomer, and (X) at least one compound having a molecular weight of 1000 or less and selected from among carboxylic acids and carboxylic anhydrides, in which, when the total amount of the component (A), the component (B), and the component (C) is set to 100% by mass, the amount of the component (A) is 20% by mass or more and 60% by mass or less, and in the morphology of a molded article made of the polyphenylene sulfide resin composition as observed with a transmission electron microscope, the (A) polyphenylene sulfide resin forms a continuous phase, and the (B) amino group-containing resin and the (C) epoxy group-containing elastomer form a dispersed phase. The present invention makes it possible to obtain a polyphenylene sulfide resin composition that has high flexibility, high toughness, heat aging resistance, and chemical resistance, and is excellent in molding processability, and a molded article using the same.

## Description

### TECHNICAL FIELD

The present invention relates to a polyphenylene sulfide resin composition, a molded article using the same, and a method for producing a molded article.

### BACKGROUND ART

In recent years, a method has been widely used in which pipes such as ducts and tubes in an engine room as automobile components are made of resin to improve fuel efficiency by weight reduction. As a material of such as pipes, a polyamide material is currently mainly used. However, in recent years, from the viewpoint of reducing the space in the engine room and optimizing the layout, the pipes have been required to have assemblability and vibration absorbability to a greater extent than before. In order to satisfy such requirements, it is important to design pipes by combining a molding method such as blow molding or extrusion molding having a high degree of freedom in molded article design with a material such as a highly flexible resin. In addition, as the distance between the pipes and the heat source becomes shorter, the external environmental temperature tends to increase.

Under such a background, a resin used for pipes of automobiles is required to have high flexibility and blow moldability or extrusion moldability in addition to higher heat resistance and chemical resistance than before.

Polyphenylene sulfide (hereinafter may be abbreviated as PPS) resins have properties suitable for engineering plastics, such as excellent heat resistance, chemical resistance, flame retardance, electric insulation, and moist heat resistance, and are therefore widely used in electrical and electronic components, communication equipment components, automobile components, and the like. On the other hand, in order to apply a PPS resin to pipes based on the above concept, there is a problem that flexibility, toughness, and blow moldability or extrusion moldability are poor.

For this reason, a tube molded article having both flexibility and chemical resistance due to a multilayer design in which PPS is disposed as a barrier layer in an inner layer and a flexible polyamide is disposed in an outer layer has been studied (for example, refer to Patent Document 1). However, in this design, durability against a liquid or a gas passing through the inside can be obtained, but when the external environmental temperature increases, the polyamide of the outer layer deteriorates, and thus the design does not satisfy all requirements.

There is a need for a material that satisfies the above required characteristics with a single material, and a resin composition including PPS, polyamide, and an epoxy group-containing elastomer, in which flexibility is imparted while a PPS resin is used as a continuous phase by appropriately reacting the polyamide with the epoxy group-containing elastomer, has been studied (for example, refer to Patent Document 2).

### PRIOR ART DOCUMENT

### PATENT DOCUMENTS

Patent Document 1: International Publication No. 1998/21030
Patent Document 2: International Publication No. 2018/3700

### SUMMARY OF THE INVENTION

### PROBLEMS TO BE SOLVED BY THE INVENTION

However, although the resin composition described in Patent Document 2 is excellent in material properties, residual viscosity increase and significant viscosity increase often occur, and a process window during molding may be restricted.

An object of the present invention is to obtain a polyphenylene sulfide resin composition which exhibits flexibility and high toughness, is dramatically improved in heat aging resistance and chemical resistance, and is excellent in moldability.

### SOLUTIONS TO THE PROBLEMS

As a result of intensive studies to solve the above problems, the present inventors have discovered that the cause of the residual viscosity increase of the resin composition during molding is an epoxy group remaining in the resin

composition, that is, have found that (X) at least one compound having a molecular weight of 1000 or less and selected from among carboxylic acids and acid dianhydrides acts on the epoxy group while maintaining appropriate reactivity between the amino group-containing resin and the epoxy group-containing elastomer, and suppresses the residual viscosity increase, and accordingly, excellent rheological properties and molding processability are obtained, and have achieved the present invention.

That is, the present invention has the following configuration.

1. A polyphenylene sulfide resin composition obtained by blending a (A) polyphenylene sulfide resin, an (B) amino group-containing resin, an (C) epoxy group-containing elastomer, and (X) at least one compound having a molecular weight of 1000 or less and selected from among carboxylic acids and carboxylic anhydrides, in which, when the total amount of the (A) polyphenylene sulfide resin, the (B) amino group-containing resin, and the (C) epoxy group-containing elastomer is set to 100% by mass, the amount of the (A) polyphenylene sulfide resin is 20% by mass or more and 60% by mass or less, and in the morphology of a molded article made of the polyphenylene sulfide resin composition as observed with a transmission electron microscope, the (A) polyphenylene sulfide resin forms a continuous phase, and the (B) amino group-containing resin and the (C) epoxy group-containing elastomer form a dispersed phase.
2. The polyphenylene sulfide resin composition according to item 1, in which the (X) at least one compound having a molecular weight of 1000 or less and selected from among carboxylic acids and carboxylic anhydrides is (X) at least one compound selected from among tetracarboxylic acids and tetracarboxylic dianhydrides.
3. The polyphenylene sulfide resin composition according to item 1 or 2, in which the (B) amino group-containing resin is a polyamide resin.
4. The polyphenylene sulfide resin composition according to item 3, in which, in the dispersed phase, the (B) polyamide resin forms a secondary dispersed phase in the dispersed phase of the (C) epoxy group-containing elastomer.
5. The polyphenylene sulfide resin composition according to item 1 or 2, in which, the (B) amino group-containing resin is an amino group-containing diene-based copolymer.
6. The polyphenylene sulfide resin composition according to item 5, in which the dispersed phase is a dispersed phase having a co-continuous structure of the (C) epoxy group-containing elastomer and the (B) amino group-containing diene-based copolymer.
7. The polyphenylene sulfide resin composition according to any one of items 1 to 6, in which an ISO (1A) dumbbell test piece obtained by injection molding the polyphenylene sulfide resin composition has a flexural modulus of 1.0 MPa or more and 1500 MPa or less as measured according to ISO 178 (2010).
8. The polyphenylene sulfide resin composition according to any one of items 1 to 7, in which a residual viscosity increase rate defined by the following formula is -30% or more and 60% or less.
Residual viscosity increase rate (%) = ((V30 - V5)/V5) × 100 (%)

Here, V5 and V30 represent a melt viscosity (pa·s) of the polyphenylene sulfide resin composition determined under the condition of a temperature of 300°C and a shear rate of 122/s after retention at 300°C for 5 minutes and 30 minutes, respectively, using a capillary rheometer.

9. The polyphenylene sulfide resin composition according to any one of items 1 to 8, in which the polyphenylene sulfide resin composition is a polyphenylene sulfide resin composition for a pipe which is in contact with cooling water for automobiles.

10. A molded article containing the polyphenylene sulfide resin composition according to any one of items 1 to 9.

11. The molded article according to item 10, in which the molded article is a hollow molded article.

12. The molded article according to item 11, in which the hollow molded article is a pipe which is in contact with cooling water for automobiles.

13. A method for producing a molded article, the method including extrusion molding the polyphenylene sulfide resin composition according to any one of items 1 to 9.

14. A method for producing a molded article, the method including blow molding the polyphenylene sulfide resin composition according to any one of items 1 to 9.

EFFECTS OF THE INVENTION

According to the present invention, a polyphenylene sulfide resin composition which exhibits a low elastic modulus, flexibility, and high toughness, is dramatically improved in heat aging resistance and chemical resistance, and is excellent in moldability can be obtained. Molded articles made of these resin compositions are suitable for tubes and hoses used by fitting or bending, especially molded articles such as ducts and hoses around automobile engines used at high temperature and under vibration.

EMBODIMENTS OF THE INVENTION

Hereinafter, the present invention will be described in more detail.

The (A) PPS resin used in the present invention is a polymer having a repeating unit represented by the following structural formula.

[Chem. 1]

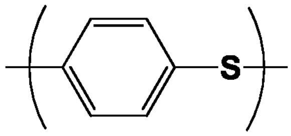

From the viewpoint of heat resistance, the (A) PPS resin is preferably a polymer containing 70% by mol or more, more preferably 90% by mol or more of a polymer containing a repeating unit represented by the above structural formula. Further, 30% by mol or less of the repeating unit of the (A) PPS resin may be composed of at least one type of repeating units represented by the following formula.

[Chem. 2]

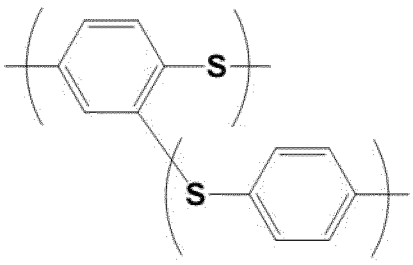

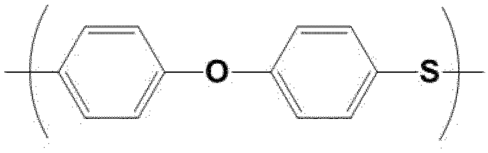

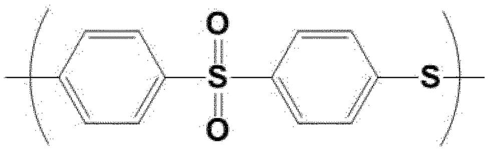

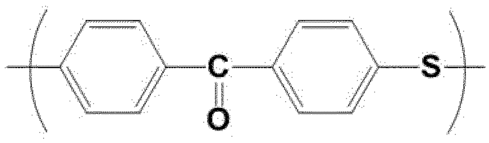

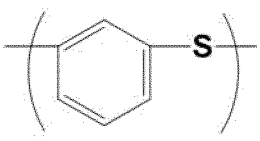

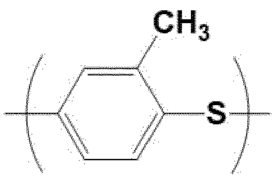

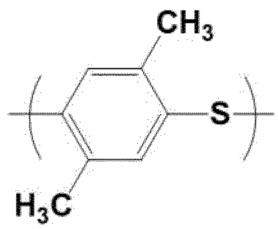

The melt viscosity of the (A) PPS resin used in the present invention is not particularly limited, but high melt viscosity is preferable from the viewpoint of obtaining superior toughness. For example, the melt viscosity is preferably more than 30 Pa·s, more preferably 50 Pa·s or more, and still more preferably 100 Pa·s or more. The upper limit of the melt viscosity is preferably 600 Pa·s or less from the viewpoint of retaining melt fluidity.

The melt viscosity of the (A) PPS resin in the present invention is a value measured using a capillary rheometer (for example, Capilograph (registered trademark) manufactured by TOYO SEIKI SEISAKU-SHO, LTD) under the conditions of a test temperature of 300°C, a residence time of 5 minutes, and a shear rate of 1216/s.

In addition, the (A) PPS resin preferably contains an alkali metal or an alkaline earth metal in order to control the reaction with the (C) epoxy group-containing elastomer and to obtain excellent toughness of the molten resin. The content of the alkali metal or alkaline earth metal in the (A) PPS resin is preferably 100 ppm or more, and more preferably 200 ppm from the viewpoint of suppressing the reaction with the (C) epoxy group-containing elastomer. The upper limit of the content is preferably 3000 ppm or less, and more preferably 2000 ppm or less from the viewpoint of obtaining an

excellent phase structure.

The amount of the (A) PPS resin in the polyphenylene sulfide resin composition needs to be 20% by mass or more and 60% by mass or less when the total amount of the (A) PPS resin, the (B) amino group-containing resin, and the (C) epoxy group-containing elastomer is 100% by mass. When the amount is less than 20% by mass, it is difficult to make the (A) PPS a continuous phase. From the viewpoint of obtaining heat resistance and chemical resistance, the amount is more preferably 25% by mass or more, and particularly preferably 30% by mass or more. The upper limit value of the amount is preferably 50% by mass or less, and more preferably 40% by mass or less. When the amount is more than 60% by mass, the contribution of the rigidity derived from the PPS resin increases, and the flexibility decreases.

As a method for producing the (A) PPS resin, a known method can be used. Examples thereof include a method of desalting polycondensation with a polyhalogenated aromatic compound and a sulfidizing agent in an organic polar solvent described in Patent Document 2 (International Publication No. 2018/003700), and a method of synthesizing under a melting condition using diiodobenzene and sulfur.

The (B) amino group-containing resin used in the present invention is a polymer containing an amino group. The amino group may be contained in the repeating unit constituting the polymer or may be contained at the polymer terminal. Specific examples of the amino group-containing resin include a polyamide resin, a polyamide-imide resin, a polyetherimide resin, a polyetherimido-siloxane copolymer, and a polyimide resin. Two or more of these may be used in combination. Among them, a polyamide resin or a polyetherimido-siloxane copolymer is more preferable from the viewpoint of flexibility, and a polyamide resin is particularly preferable from the viewpoint of compatibility with the (A) polyphenylene sulfide and cost.

The polyamide resin (hereinafter may be abbreviated as PA resin) is a polymer containing an amino acid, a lactam, or a diamine, and a dicarboxylic acid as main constituting units.

Representative examples of the constituting units of polyamides include amino acids such as 6-aminocaproic acid, 11-aminoundecanoic acid, 12-aminododecanoic acid, and p-aminomethyl benzoic acid; lactams such as ε-aminocaprolactam and ω-laurolactam; diamines such as tetramethylenediamine, hexamethylenediamine, 2-methylpentamethylenediamine, undecamethylenediamine, dodecamethylenediamine, 2,2,4-/2,4,4-trimethylhexamethylenediamine, 5-methylnonamethylenediamine, meta-xylylenediamine, para-xylylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, and 2-methylpentamethylenediamine; and dicarboxylic acids such as adipic acid, suberic acid, azelaic acid, sebacic acid, dodecanedioic acid, terephthalic acid, isophthalic acid, 2-chloroterephthalic acid, 2-methylterephthalic acid, 5-methylisophthalic acid, 5-sodium sulfoisophthalic acid, hexahydroterephthalic acid, hexahydroisophthalic acid, and dimer acid.

In the present invention, examples of preferable polyamide resins include polycaproamide (nylon 6), polyhexamethylene adipamide (nylon 66), polytetramethylene adipamide (nylon 46), polyhexamethylene sebacamide (nylon 610), polyhexamethylene dodecamide (nylon 612), polydodecanamide (nylon 12), polyundecanamide (nylon 11), polyhexamethylene terephthalamide (nylon 6T), polyxylylene adipamide (nylon XD6), polynonamethylene terephthalamide (nylon 9T), polydecamethylene terephthalamide (nylon 10 T), and mixtures or copolymers thereof.

Among them, from the viewpoint of obtaining more flexibility, a polyamide resin composed of a constituting unit in which the number of carbon atoms per amide group is in the range of 10 to 16 is preferable. Examples of the polyamide resin include polyhexamethylene sebacamide (nylon 610), polydodecanamide (nylon 12), and polyundecanamide (nylon 11).

The polymerization degree of the polyamide resin is not particularly limited, but the relative viscosity measured in a 98% concentrated sulfuric acid solution (1 g polymer, 100 ml concentrated sulfuric acid) at 25°C is preferably in the range of 1.5 to 7.0, more preferably in the range of 2.0 to 6.5, and still more preferably in the range of 2.5 to 5.5.

As the (B) amino group-containing resin, a thermoplastic elastomer containing an amino group can also be used. Specific examples of thermoplastic elastomer include a polyolefin-based copolymer, a diene-based copolymer, a polyurethane-based copolymer, a polyamide-based copolymer, and a polyester-based copolymer. The amino group may be contained in the repeating unit constituting the thermoplastic elastomer or may be contained at the polymer terminal. From the viewpoint of reactivity or compatibility with the (C) epoxy group-containing elastomer, an amino group-containing diene-based copolymer is preferable.

Here, the diene-based copolymer is a conjugated diene-based polymer having a conjugated diene compound having a pair of conjugated double bonds as a main constituting unit. Representative examples of the conjugated diene compound include 1,3-butadiene, 2-methyl-1,3-butadiene (isoprene), 2,3-dimethyl-1,3-butadiene, 1,3-pentadiene, 2-methyl-1-3 pentadiene, and 1,3-hexadiene. Among them, 1,3-butadiene and isoprene are preferable from the viewpoint of availability and productivity. The diene-based copolymer may be composed of one type of conjugated diene compound unit or may contain two or more types of conjugated diene compound units. Here, the conjugated diene compound unit represents a constituting unit derived from a conjugated diene compound which is a monomer. The diene-based copolymer in the present invention includes a polymer in which some or all of conjugated diene units are hydrogenated. That

is, a polymer containing a structure in which a structural unit derived from a conjugated diene compound is hydrogenated is also contained in the diene-based copolymer. From the viewpoint of reactivity or compatibility with the (C) epoxy group-containing elastomer, a polymer having a conjugated double bond in at least a part thereof is preferable.

The amino group-containing diene-based copolymer may contain a constituting unit other than the conjugated diene compound unit. The amino group-containing diene-based copolymer is preferably a block copolymer having two or more polymer blocks selected from the group consisting of a (a) vinyl aromatic polymer block, a (b) conjugated diene polymer block, and a (c) random copolymer block of a conjugated diene compound and a vinyl aromatic compound.

Examples of the vinyl aromatic compound constituting the (a) vinyl aromatic polymer block include, but are not limited to, vinyl aromatic compounds such as styrene, α-methylstyrene, p-methylstyrene, divinylbenzene, 1,1-diphenylethylene, N,N-dimethyl-p-aminoethylstyrene, and N,N-diethyl-p-aminoethylstyrene. Among them, styrene is preferable from the viewpoint of availability and productivity. The (a) vinyl aromatic polymer block may be composed of one type of vinyl aromatic monomer unit or two or more types of vinyl aromatic monomer units.

Examples of the conjugated diene compound constituting the (b) conjugated diene polymer block include, but are not limited to, 1,3-butadiene, 2-methyl-1,3-butadiene (isoprene), 2,3-dimethyl-1,3-butadiene, 1,3-pentadiene, 2-methyl-1-3 pentadiene, and 1,3-hexadiene. Among them, 1,3-butadiene and isoprene are preferable from the viewpoint of availability and productivity. The (b) conjugated diene polymer block may be composed of one type of conjugated diene monomer unit or two or more types of conjugated diene monomer units. As described above, some or all of the conjugated diene units may be hydrogenated, but at least a part of the (b) conjugated diene polymer block preferably has a conjugated double bond from the viewpoint of reactivity and compatibility with the (C) epoxy group-containing elastomer.

As the conjugated diene compound and the vinyl aromatic compound constituting the (c) random copolymer block of the conjugated diene compound and the vinyl aromatic compound, those exemplified as the compound that can be used for the (a) vinyl aromatic polymer block and the (b) conjugated diene polymer block can be used.

The amount of the (B) amino group-containing resin in the polyphenylene sulfide resin composition is preferably in a range of 1 part by mass or more and 200 parts by mass or less with respect to 100 parts by mass of the (A) PPS resin. When the amount of the (B) amino group-containing resin is 1 part by mass or more, toughness and flexibility are excellent. By setting the amount of the (B) amino group-containing resin to 200 parts by mass or less, the reaction with the (C) epoxy group-containing elastomer can be controlled, and the generation of a gelled product can be suppressed, and thus the toughness is not lowered, which is preferable. The lower limit value of the amount is more preferably 10 parts by mass or more, still more preferably 20 parts by mass or more, and particularly preferably 30 parts by mass or more from the viewpoint of obtaining the assemblability of the molded article. The upper limit value of the amount is more preferably 150 parts by mass or less, still more preferably 140 parts by mass or less, further preferably 130 parts by mass or less, and particularly preferably 120 parts by mass or less from the viewpoint of obtaining heat resistance and chemical resistance.

The (C) epoxy group-containing elastomer used in the present invention specifically refers to a thermoplastic epoxy group-containing elastomer. Specific examples of thermoplastic elastomer include a polyolefin-based copolymer, a diene-based copolymer, a polyurethane-based copolymer, a polyamide-based copolymer, and a polyester-based copolymer. A polyolefin-based copolymer is preferable from the viewpoint of compatibility with the (A) PPS resin and cost.

Examples of the epoxy group-containing polyolefin-based copolymer include an olefin-based copolymer having glycidyl ester, glycidyl ether, glycidyl diamine, or the like in a side chain, and a product obtained by epoxy-oxidizing a double bond part of an olefin-based copolymer having a double bond. Among them, an olefin-based copolymer obtained by copolymerizing a monomer having an epoxy group is suitable, and in particular, an olefin-based copolymer (C1) (hereinafter may be abbreviated as an olefin-based copolymer (C1) containing an epoxy group) containing an α-olefin and a glycidyl ester of an α,β-unsaturated acid as constituent components is suitably used.

Specific examples of the α-olefin include ethylene, propylene, butene-1, 4-methylpentene-1, hexene-1, decene-1, and octene-1, and among them, ethylene is preferably used. In addition, two or more of these can be used simultaneously.

Specific examples of the glycidyl ester of an α,β-unsaturated acid include glycidyl acrylate, glycidyl methacrylate, and glycidyl ethacrylate, and among them, glycidyl methacrylate is preferably used.

The olefin-based copolymer (C1) may be any of a random copolymer, a block copolymer, and a graft copolymer of the α-olefin and a glycidyl ester of an α,β-unsaturated acid.

The copolymerization amount of the glycidyl ester of an α,β-unsaturated acid in the olefin-based copolymer (C1) is preferably 1% by mass or more, more preferably 3% by mass or more, and particularly preferably 5% by mass or more from the viewpoint of influence on an intended effect, polymerizability, gelation, heat resistance, fluidity, strength, and the like. The upper limit value of the copolymerization amount is preferably 40% by mass or less, more preferably 15% by mass or less, particularly preferably 10% by mass or less from the viewpoint of reducing entanglement of molecular chains and obtaining excellent toughness during melting of the PPS resin composition.

The olefin-based copolymer (C1) is an α-olefin and a glycidyl ester of an α,β-unsaturated acid, and further an

α,β-unsaturated carboxylic acid alkyl ester such as methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate, or isobutyl methacrylate; and copolymer components such as acrylonitrile, styrene, α-methylstyrene, styrene in which the aromatic ring is substituted with an alkyl group, and acrylonitrile-styrene copolymer. Two or more of these can be used simultaneously.

In order to adjust the reaction with the (B) amino group-containing resin, it is also possible to use two or more types of (C) epoxy group-containing elastomer.

The amount of the (C) epoxy group-containing elastomer in the polyphenylene sulfide resin composition needs to be 20% by mass or more, and more preferably 25% by mass or more when the total amount of the (A) PPS resin, the (B) amino group-containing resin, and the (C) epoxy group-containing elastomer is 100% by mass. By setting the amount to 20% by mass or more, sufficient flexibility can be obtained, and a desired phase structure can be obtained. The upper limit value of the amount is preferably 70% by mass or less, more preferably 60% by mass or less, and particularly preferably 50% by mass or less from the viewpoint of obtaining an appropriate viscosity. When the amount is 70% by mass or less, occurrence of thermal decomposition of the polymer due to occurrence of excessive shear heat generation due to remarkable increase in viscosity is suppressed.

By further blending an (D) elastomer not containing a functional group together with the (C) epoxy group-containing elastomer, superior toughness and flexibility can be obtained, which is preferable.

Examples of the (D) elastomer not containing a functional group include polyolefin-based elastomers, diene-based elastomers, silicone rubbers, fluororubbers, and urethane rubbers.

Specific examples of the polyolefin-based elastomer include olefin-based copolymers such as an ethylene-propylene copolymer, an ethylene-butene copolymer, an ethylene-hexene copolymer, an ethylene-octene copolymer, polybutene, and an ethylene-propylene-diene copolymer.

Specific examples of the diene-based elastomer include a styrene-butadiene copolymer, polybutadiene, a butadiene-acrylonitrile copolymer, polyisoprene, a butene-isoprene copolymer, SBS, SIS, SEBS, and SEPS.

Among them, an ethylene-propylene copolymer, an ethylene-butene copolymer, an ethylene-hexene copolymer, an ethylene-octene copolymer, and an ethylene-propylene-diene copolymer are particularly preferable.

Two or more types of (D) elastomers not containing a functional group may be used in combination in order to obtain desired characteristics.

By the amount of the (D) elastomer not containing a functional group in the polyphenylene sulfide resin composition, the flexibility can be dramatically improved by setting the total amount (unit: % by mass) of all elastomers (component (C) + component (D)) to a specific range with respect to 100% by mass of the total amount of the (A) PPS resin, the (B) amino group-containing resin, the (C) epoxy group-containing elastomer, and the (D) elastomer not containing a functional group in the polyphenylene sulfide resin composition. Specifically, the total amount of all elastomers is preferably 70% by mass or less, more preferably 60% by mass or less, and still more preferably 55% by mass or less from the viewpoint of moldability. The lower limit of the total amount of all elastomers is preferably 20% by mass or more, more preferably 25% by mass or more, and particularly preferably 30% by mass or more from the viewpoint of obtaining flexibility.

In the polyphenylene sulfide resin composition, by setting the formulation ratio of the (C) epoxy group-containing elastomer and the (D) elastomer not containing a functional group to a specific range, toughness can be improved while excellent flexibility is maintained. As the index, an epoxy group-containing elastomer ratio is used. Here, the epoxy group-containing elastomer ratio is defined as a value determined by $C_0/ (C_0 + D_0)$ where $C_0$ is a part by mass of the (C) epoxy group-containing elastomer with respect to 100 parts by mass of the (A) PPS resin, and $D_0$ is a part by mass of the (D) elastomer not containing a functional group with respect to 100 parts by mass of the (A) PPS resin. The epoxy group-containing elastomer ratio is preferably 0.5 or more and 1.0 or less, and more preferably 0.7 or more and 1.0 or less. When the epoxy group-containing elastomer ratio is in such a range, the (C) epoxy group-containing elastomer and the (A) polyphenylene sulfide resin sufficiently react with each other to improve the dispersibility of the (C) epoxy group-containing elastomer and the (D) elastomer not containing a functional group, and accordingly, excellent toughness is exhibited. The (B) amino group-containing resin and the (C) epoxy group-containing elastomer sufficiently react with each other to increase the viscosity, and accordingly, the (A) polyphenylene sulfide resin easily forms a continuous phase, and as a result, excellent heat resistance and chemical resistance tend to be exhibited.

The (X) at least one compound having a molecular weight of 1000 or less and selected from among carboxylic acids and carboxylic anhydrides (hereinafter may be abbreviated as component (X)) used in the present invention is a non-polymeric compound having a structure of a carboxylic acid or a carboxylic anhydride in the molecule. The present inventors have found that, by adding the component (X) to the polyphenylene sulfide resin composition of the present invention, the reactivity of the epoxy group remaining in the (C) epoxy group-containing elastomer and the reactivity of the (B) amino group-containing resin are adjusted, the residual viscosity increase is suppressed while the appropriate reactivity of the (B) amino group-containing resin and the (C) epoxy group-containing elastomer is maintained, and accordingly, excellent phase structure and mechanical characteristics, and rheological properties and molding processability can be compatible at a high level.

The molecular weight of the component (X) is required to be 1000 or less, and preferably 500 or less from the viewpoint of efficiently reacting with the (A) PPS resin, the (B) amino group-containing resin, and the (C) epoxy group-containing elastomer. The lower limit of the molecular weight is preferably 100 or more from the viewpoint of chemical and physical stability.

The structure of the component (X) is not limited as long as the above effect is achieved, but a compound containing an aromatic ring is preferable from the viewpoint of chemical and physical stability. In particular, from the viewpoint of preferably adjusting the reactivity of the reactive group of the (A) PPS resin, the amino group of the (B) amino group-containing resin, and the epoxy group of the (C) epoxy group-containing elastomer, the component (X) is preferably at least one selected from tetracarboxylic acid and tetracarboxylic dianhydride. Furthermore, the tetracarboxylic acid preferably has a structure in which tetracarboxylic dianhydride can be generated by dehydration condensation in the molecule. In addition, it is preferable that an imide group is generated in the polyphenylene sulfide resin composition by adding the component (X) from the viewpoint of appropriately controlling the reaction. These compounds may be used alone or in combination of two or more. The tetracarboxylic acid may be a tetracarboxylic dianhydride in which a part thereof is dehydration-condensed in the molecule, or these may be used in combination.

Specific examples of the component (X) include tetracarboxylic dianhydrides such as pyromellitic dianhydride, 3,3',4,4'-biphenyltetracarboxylic dianhydride, 2,2',3,3'-biphenyltetracarboxylic dianhydride, 4,4'-(hexafluoroisopropylidene)diphthalic anhydride, 5-(2,5-dioxotetrahydro-3-furanyl)-3-methyl-cyclohexene-1,2dicarboxylic anhydride, 1,2,3,4-benzenetetracarboxylic dianhydride, 3,3',4,4'-benzophenonetetracarboxylic dianhydride, 2,2',3,3'-benzophenonetetracarboxylic dianhydride, 3,3',4,4'-diphenylsulfonetetracarboxylic dianhydride, methylene-4,4'-diphthalic dianhydride, 1,1-ethylidene-4,4'-diphthalic dianhydride, 2,2-propylidene-4,4'-diphthalic dianhydride, 1,2-ethylene-4,4'-diphthalic dianhydride, 1,3-trimethylene-4,4'-diphthalic dianhydride, 1,4-tetramethylene-4,4'-diphthalic dianhydride, 1,5-pentamethylene-4,4'-diphthalic dianhydride, 4,4'-oxydiphthalic dianhydride, p-phenylene bis(trimellitate anhydride), thio-4,4'-diphthalic dianhydride, sulfonyl-4,4'-diphthalic dianhydride, 1,3-bis(3,4-dicarboxyphenyl)benzene dianhydride, 1,3-bis(3,4-dicarboxyphenoxy)benzene dianhydride, 1,4-bis(3,4-dicarboxyphenoxy)benzene dianhydride, 1,3-bis[2-(3,4-dicarboxyphenyl)-2-propyl]benzene dianhydride, 1,4-bis[2-(3,4-dicarboxyphenyl)-2-propyl]benzene dianhydride, bis[3-(3,4-dicarboxyphenoxy)phenyl]methane dianhydride, bis[4-(3,4-dicarboxyphenoxy)phenyl]methane dianhydride, 2,2-bis[3-(3,4-dicarboxyphenoxy)phenyl]propane dianhydride, 2,2-bis[4-(3,4-dicarboxyphenoxy)phenyl]propane dianhydride, bis(3,4-dicarboxyphenoxy)dimethylsilane dianhydride, 1,3-bis(3,4-dicarboxyphenyl)-1,1,3,3-tetramethyldisiloxane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride, and tetracarboxylic acids obtained by ring-opening these acid anhydrides with water. Pyromellitic dianhydride or pyromellitic acid is preferable from the viewpoint of industrial availability and cost.

The amount of the component (X) cannot be generally defined because the amount depends on the type of the component (X) to be used and the type and amount of the (C) epoxy group-containing elastomer, but it is preferable to add 0.01 parts by mass or more and 3 parts by mass or less, preferably 0.1 parts by mass or more, and more preferably 0.3 parts by mass or more with respect to 100 parts by mass of the (A) PPS resin from the viewpoint of obtaining excellent molding processability. The upper limit of the amount is preferably 2 parts by mass or less from the viewpoint of obtaining excellent heat resistance and chemical resistance.

The polyphenylene sulfide resin composition of the present invention may be obtained by blending components other than the (A) PPS resin, the (B) amino group-containing resin, the (C) epoxy group-containing elastomer, the component (X), and the (D) elastomer not containing a functional group as necessary as long as the properties thereof are not impaired. The other components are additives, thermoplastic resins other than those described above, fillers, and the like. Specifically, those described in Patent Document 2 (International Publication No. 2018/003700) and the like can be used.

From the viewpoint of obtaining high flexibility, the polyphenylene sulfide resin composition of the present invention preferably has a flexural modulus of 1.0 MPa or more and 1500 MPa or less when an ISO dumbbell test piece (1A) obtained by injection molding is measured according to ISO 178 (2010). The flexural modulus is preferably 1200 MPa or less, more preferably 1000 MPa or less from the viewpoint of obtaining vibration absorbability, and particularly preferably 800 MPa or less from the viewpoint of obtaining excellent vibration absorbability. The flexural modulus is more preferably 600 MPa or less from the viewpoint of obtaining excellent assemblability of the molded article. From the viewpoint of obtaining high flexibility, the flexural modulus is preferably as low as possible, but from the viewpoint of retaining the shape of the molded article, the flexural modulus is preferably 10 MPa or more. When the flexural modulus is less than 1.0 MPa, for example, the molded article is largely deformed when used in a high-temperature environment, and thus the shape retaining becomes difficult, which is not preferable.

The flexural modulus of the polyphenylene sulfide resin composition can be adjusted by the flexural modulus of each constituent component of the resin composition and the amount thereof. In the polyphenylene sulfide resin

composition, when the total amount of the (A) PPS resin, the (B) amino group-containing resin, and the (C) epoxy group-containing elastomer is 100% by mass, it is effective that the amount of the (A) PPS resin is 20% by mass or more and 60% by mass or less in order to set the flexural modulus of the polyphenylene sulfide resin composition within the above range. In addition, the flexural modulus can be lowered by using a flexible component as the (B) amino group-containing resin and increasing the amount of the (C) epoxy group-containing elastomer and/or the (D) elastomer not containing a functional group. For example, as the (B) amino group-containing resin, it is preferable to use a polyamide resin composed of a constituting unit in which the number of carbon atoms per one amide group is in the range of 10 to 16. Examples of the polyamide resin include polyhexamethylene sebacamide (nylon 610), polydodecanamide (nylon 12), and polyundecanamide (nylon 11). In addition, it is also preferable to use a polyamide-based thermoplastic elastomer obtained by copolymerization with the soft segment. In addition, it is particularly preferable to use an amino group-containing diene-based copolymer as the (B) amino group-containing resin from the viewpoint of obtaining flexibility.

From the viewpoint of obtaining toughness, the polyphenylene sulfide resin composition of the present invention preferably has a tensile elongation of 50% or more and 200% or less when the ISO dumbbell test piece (1A) obtained by injection molding is measured according to ISO 527-1 and 527-2 (2012). The tensile elongation is preferably 60% or more, and more preferably 70% or more from the viewpoint of obtaining practical toughness of the molded article, and particularly preferably 80% or more from the viewpoint of securing toughness even after deterioration in a heat aging resistance test or a chemical resistance test. From the viewpoint of obtaining high toughness, higher tensile elongation is more preferable, but when the tensile elongation is more than 200%, the flexibility becomes extremely high, and it may be difficult to retain the shape when the molded article is used in a high-temperature environment, which is not preferable.

The tensile elongation of the polyphenylene sulfide resin composition can be adjusted by using the (C) epoxy group-containing elastomer and the (D) elastomer not containing a functional group in combination. The tensile elongation can also be adjusted by appropriately reacting the (B) amino group-containing resin with the (C) epoxy group-containing elastomer.

The melt viscosity of the polyphenylene sulfide resin composition of the present invention is preferably in a range exceeding 500 Pa·s, and more preferably 700 Pa·s or more from the viewpoint of the take-up property of the molten resin during extrusion molding. From the viewpoint of suppressing drawdown during blow molding, the melt viscosity is particularly preferably 900 Pa·s or more, and further preferably 1300 Pa·s or more. The upper limit of the melt viscosity is preferably 3000 Pa·s or less from the viewpoint of retaining melt fluidity, and is preferably 2500 Pa·s or less, and particularly preferably 2000 Pa·s or less from the viewpoint of improving toughness during melting and obtaining molding processability. When the melt viscosity is less than 500 Pa·s, extrusion molding becomes difficult and heat aging resistance is lowered, which is not preferable.

The melt viscosity of the polyphenylene sulfide resin composition in the present invention is a value measured using a capillary rheometer (for example, Capilograph (registered trademark) manufactured by TOYO SEIKI SEISAKU-SHO, LTD) under the conditions of a test temperature of 300°C and a shear rate of 122/s. The melt viscosity measured after retention at a temperature of 300°C for 5 minutes is defined as V5, and the melt viscosity measured after retention at a temperature of 300°C for 30 minutes is defined as V30. Both V5 and V30 preferably fall within the above preferable ranges.

Furthermore, from the viewpoint of widening the process window for molding and improving moldability, the polyphenylene sulfide resin composition of the present invention preferably has a residual viscosity increase rate defined below of -30% or more and 60% or less. The upper limit of the residual viscosity increase rate is more preferably 50% or less, particularly preferably 40% or less, and still more preferably 30% or less from the viewpoint of application to a molding method having a long residence time. The lower limit of the residual viscosity increase rate is preferably -20% or more, and more preferably -10% or more from the viewpoint of stabilizing molding conditions.

$$\text{Residual viscosity increase rate (\%)} = ((V30 - V5)/V5) \times 100\ (\%)$$

The melt viscosity (V5) when the residence time of the polyphenylene sulfide resin composition of the present invention is 5 minutes is caused by entanglement of polymer chains of polymers constituting the resin composition. For example, it is possible to increase the melt viscosity V5 by selecting one having a high viscosity for each of the (A) PPS resin, the (B) amino group-containing resin, and the (C) epoxy group-containing elastomer. The melt viscosity V5 can also be increased by selecting an elastomer having a high-functionality group amount as the (C) epoxy group-containing elastomer, or by increasing shear heat generation during melt kneading to promote the reaction between the (B) amino group-containing resin and the (C) epoxy group-containing elastomer. As a means for suppressing the change in the melt viscosity (V30) when the residence time is 30 minutes with respect to the melt viscosity (V5) of the polyphenylene

sulfide resin composition, a method of reducing the amount of epoxy groups remaining unreacted in the (C) epoxy group-containing elastomer in the polyphenylene sulfide resin composition is an effective adjustment method. Specific examples thereof include selecting a compound having a low functional group amount as the (C) epoxy group-containing elastomer, and promoting the reaction between the (B) amino group-containing resin and the (C) epoxy group-containing elastomer during melt kneading to consume an epoxy group. In particular, by adding the component (X), the amount of epoxy groups remaining unreacted can be efficiently reduced. It is preferable to reduce the absolute value of the residual viscosity increase rate by adjusting the melt viscosity (V30) from the viewpoint of widening the process window during molding.

The take-up speed at break of the polyphenylene sulfide resin composition of the present invention is a take-up speed at which the strand breaks when the take-up speed is increased in melt tension measurement using a capillary rheometer, and is an index of toughness at the time of melting of the PPS resin composition. Therefore, the take-up speed at break is preferably 50 m/min or more, and more preferably 60 m/min or more from the viewpoint of improving the take-up property of the molten resin at the time of extrusion molding, and particularly preferably 80 m/min or more, and still more preferably 100 m/min or more from the viewpoint of widening the process window at the time of molding. Furthermore, from the viewpoint of being applied to a molding method having a long residence time, the take-up speed at break after the polyphenylene sulfide resin composition is retained in the capillary rheometer for 30 minutes is also preferably in the above range. In this measurement, the measurement limit is 200 m/min, and even when the measurement limit is 200 m/min, there is no particular problem, and thus the upper limit of the take-up speed at break is not determined. When the take-up speed at break is less than 50 m/min, the toughness of the PPS resin composition during melting decreases, resin breakage easily occurs during extrusion molding, and the process window becomes narrow, which is not preferable.

In order to increase the take-up speed at break, it is important to balance the stability of the interface between the entanglement of polymer chains of the polymer constituting the resin composition, the phase containing the (A) PPS resin, and the phase containing the (B) amino group-containing resin and the (C) epoxy group-containing elastomer. For example, when the reactivity between the (A) PPS resin and the (C) epoxy group-containing elastomer or the reactivity between the (B) amino group-containing resin and the (C) epoxy group-containing elastomer is high, entanglement of polymer chains is increased, the melt viscosity and the melt tension are increased, and as a result, the take-up speed at break tends to decrease. On the other hand, when an excellent phase structure is obtained, the interfacial strength between the phases is improved, and the take-up speed at break tends to increase. By adding the component (X) to the polyphenylene sulfide resin composition, the balance between them can be enhanced, and an excellent take-up speed at break can be obtained. In addition, by reducing the absolute value of the residual viscosity increase rate, it is possible to maintain an excellent take-up speed at break even after retention. Although details of the phase structure will be described later, in the polyphenylene sulfide resin composition of the present invention, it is important that the (A) PPS resin forms a continuous phase, and the (B) amino group-containing resin and the (C) epoxy group-containing elastomer form a dispersed phase.

The take-up speed at break of the polyphenylene sulfide resin composition in the present invention is a take-up speed at which the strand breaks when the strand is taken up using a capillary rheometer (for example, Capilograph (registered trademark) manufactured by TOYO SEIKI SEISAKU-SHO, LTD) under the conditions of a test temperature of 300°C, a capillary length of 10 mm, a capillary diameter of 1 mm, an extrusion speed of 50 mm/min, a distance between die and pulley of 350 mm, and a take-up speed of 10 m/min, and the take-up speed is increased at an acceleration of 380 m/min$^2$. The measurement limit of the present apparatus was 200 m/min, and when the sample was not broken even when the take-up speed reached 200 m/min, the sample was considered to have no breakage.

In the polyphenylene sulfide resin composition of the present invention, in the morphology of the molded article observed with a transmission electron microscope, the (A) PPS resin needs to form a continuous phase, and the (B) amino group-containing resin and the (C) epoxy group-containing elastomer need to form a dispersed phase. Although the amount of the (A) PPS resin in the polyphenylene sulfide resin composition is a relatively small amount of 20% by mass or more and 60% by mass or less when the total amount of the (A) PPS resin, the (B) amino group-containing resin, and the (C) epoxy group-containing elastomer is 100% by mass, the (A) PPS resin becomes a continuous phase, and accordingly, the polyphenylene sulfide resin composition of the present invention can exhibit not only high flexibility and high toughness but also excellent heat aging resistance and chemical resistance derived from the PPS resin. Here, "the (B) amino group-containing resin and the (C) epoxy group-containing elastomer form a dispersed phase" means that a dispersed phase containing both the (B) amino group-containing resin and the (C) epoxy group-containing elastomer is formed in one dispersed phase. As long as one dispersed phase contains both the component (B) and the component (C), other components may be contained, and for example, a reactant obtained by reacting the component (B) with the component (C) may be contained, or the component (A) may be partially contained. When a dispersed phase containing both the component (B) and the component (C) is present, a dispersed phase containing only the component (B) may be further present, or a dispersed phase containing only the component (C) may be further present. Furthermore, the dispersed phase may have a co-continuous structure of the component (B) and the component (C). In addition, a structure

in which the (C) epoxy group-containing elastomer forms a dispersed phase and the (B) amino group-containing resin forms a secondary dispersed phase in the dispersed phase, or a structure in which the (C) epoxy group-containing elastomer forms a secondary dispersed phase in the dispersed phase of the (B) amino group-containing resin may be employed. Such a dispersion structure is also referred to as a sea/island/lake structure or a salami structure.

In order to form such a phase structure, it is necessary to appropriately react the (B) amino group-containing resin with the (C) epoxy group-containing elastomer. Through this reaction, the melt viscosity of the component obtained by reacting the (B) amino group-containing resin with the (C) epoxy group-containing elastomer in the polyphenylene sulfide resin composition is larger than the melt viscosity of the (A) PPS resin. Accordingly, even when the mass fraction of the (A) PPS resin in the polyphenylene sulfide resin composition is small, the (A) PPS resin can serve as a continuous phase.

From the viewpoint of obtaining superior heat aging resistance and toughness, the (B) amino group-containing resin and the (C) epoxy group-containing elastomer are preferably contained in one dispersed phase. In order to form such a phase structure, it is important to enhance the compatibility between the (B) amino group-containing resin and the (C) epoxy group-containing elastomer.

As a combination for enhancing compatibility, it is preferable to use an epoxy group-containing polyolefin-based copolymer as the (C) epoxy group-containing elastomer, and to use a polyamide resin composed of a constituting unit having 10 to 16 carbon atoms per one amide group as the (B) amino group-containing resin. In this case, it is easy to obtain a structure in which the polyamide resin (B) forms a secondary dispersed phase in the dispersed phase of the (C) epoxy group-containing polyolefin-based copolymer. By having such a dispersion structure, the manifestation of the decrease in chemical resistance derived from the polyamide resin is suppressed, and excellent chemical resistance is easily obtained.

It is also preferable to use an epoxy group-containing polyolefin-based copolymer as the (C) epoxy group-containing elastomer, and to use an amino group-containing diene-based copolymer as the (B) amino group-containing resin from the viewpoint of obtaining flexibility. In this case, since the combination is particularly excellent in compatibility, a dispersed phase having a co-continuous structure of the (B) amino group-containing resin and the (C) epoxy group-containing polyolefin-based copolymer is obtained, and excellent toughness is easily obtained. In order to further improve the compatibility, it is preferable to use a block copolymer containing the (a) vinyl aromatic polymer block and the (b) conjugated diene polymer block as the amino group-containing diene-based copolymer. It is particularly preferable to increase the proportion of the (b) conjugated diene polymer block in the constituting units of the block copolymer in order to improve compatibility.

When the reaction between the (B) amino group-containing resin and the (C) epoxy group-containing elastomer is not appropriate, for example, gelation occurs due to excessive reaction of these components, melt processability and molding processability significantly deteriorate, and in addition, sometimes the (B) amino group-containing resin cannot form a dispersed phase. This may cause deterioration in heat resistance and chemical resistance of the polyphenylene sulfide resin composition. In order to suppress this excessive reaction, it is effective to adjust the reactivity of the (C) epoxy group-containing elastomer by adding the component (X), to optimize the cylinder temperature of the extruder during melt kneading to be described later, and to use a stirring screw having a notch portion.

Examples of other cases where the reaction between the (B) amino group-containing resin and the (C) epoxy group-containing elastomer is not appropriate include a case where the reaction of these components is insufficient and the (A) PPS resin cannot form a continuous phase. Examples of the case where the reaction is insufficient include a case where the kneading is performed a plurality of times during melt kneading, a case where the reaction between the (B) amino group-containing resin and the (C) epoxy group-containing elastomer is intentionally avoided using a side feeder or the like, and a case where the reactivity of the (C) epoxy group-containing elastomer is reduced by the action of an additive and the reaction with the (B) amino group-containing resin does not occur.

In the polyphenylene sulfide resin composition of the present invention, the number average dispersed particle size of the dispersed phase containing the (B) amino group-containing resin is preferably 2000 nm or less, more preferably 1500 nm or less, particularly preferably 1000 nm or less, and still more preferably 700 nm or less in order to exhibit excellent toughness and heat aging resistance. The lower limit of the number average dispersed particle size of the dispersed phase is preferably 10 nm or more.

In the polyphenylene sulfide resin composition of the present invention, the number average dispersed particle size of the dispersed phase containing the (C) epoxy group-containing elastomer is preferably 1000 nm or less, and more preferably 700 nm or less in order to exhibit excellent toughness and flexibility. The lower limit of the number average dispersed particle size of the dispersed phase is preferably 5 nm or more. In order to obtain such a dispersion diameter, it is effective to appropriately react the (A) polyphenylene sulfide resin with the (C) epoxy group-containing elastomer.

In addition, as described above, the polyphenylene sulfide resin composition of the present invention can be obtained by blending the (C) epoxy group-containing elastomer and the (D) elastomer not containing a functional group. In this case, the (D) elastomer not containing a functional group also forms a dispersed phase. The number average

dispersed particle size of the dispersed phase is preferably 2000 nm or less, and more preferably 1500 nm or less in order to exhibit excellent toughness and flexibility. The lower limit of the number average dispersed particle size of the dispersed phase is preferably 10 nm or more. In order to obtain such a dispersion diameter, it is effective to appropriately react the (A) PPS resin with the (C) epoxy group-containing elastomer.

The polyphenylene sulfide resin composition of the present invention preferably has a phase structure in which the (B) polyamide resin forms a secondary dispersed phase in the dispersed phase composed of the (C) epoxy group-containing elastomer. The number average dispersed particle size of the secondary dispersed phase is preferably less than 1000 nm, more preferably 500 nm or less, and particularly preferably 300 nm or less in order to exhibit excellent toughness, flexibility, heat aging resistance, and chemical resistance. The lower limit of the number average dispersed particle size of the secondary dispersed phase is preferably 5 nm or more. In order to obtain such a secondary dispersed phase, it is effective to appropriately react the (B) polyamide resin with the (C) epoxy group-containing elastomer.

The number average dispersed particle size of each dispersed phase in these phase-separated structures is determined by the following method. For example, an ultrathin section is cut out from a pellet, a blow molded article, an injection molded article or the like of the polyphenylene sulfide resin composition using an ultramicrotome, and a sample obtained by staining the ultrathin section with ruthenium tetroxide or the like and an unstained sample are observed with a transmission electron microscope at a magnification of 5000 to 10000 times. From the obtained image, 10 random different dispersed phases are selected, the major diameter and the minor diameter of each dispersed phase are determined to take average values, and the number average value of these average values can be calculated as the number average dispersed particle size of the dispersed phase. The identification of the components constituting the dispersed phase can be determined by comparing a phase contrast difference in an unstained sample with a phase contrast difference in a sample stained with ruthenium tetroxide or the like.

The polyphenylene sulfide resin composition of the present invention having the phase structure described above preferably has a tensile elongation retention of 40% or more after a durability treatment at a temperature of 170°C × 1000 hr from the viewpoint of exhibiting excellent heat aging resistance. The tensile elongation retention is more preferably 50% or more, still more preferably 60% or more, and further more preferably 70% or more. The tensile elongation retention refers to the ratio of the tensile elongation after the 170°C × 1000 hr durability treatment to the tensile elongation before the 170°C × 1000 hr durability treatment.

Further, the polyphenylene sulfide resin composition of the present invention has a characteristic of being excellent in chemical resistance. Therefore, for example, it is suitably used as a pipe which is in contact with cooling water containing ethylene glycol as a main component used for cooling an engine or a motor of an automobile. The tensile elongation retention after completely immersing an ISO (1A) dumbbell test piece, which is obtained by injection molding a polyphenylene sulfide resin composition, in a liquid obtained by mixing a long life coolant (LLC) such as Toyota Super Long Life Coolant (product number 08889-01005) manufactured by Toyota Motor Corporation and ion-exchanged water at a mass ratio of 1:1 under the condition of 150°C × 1000 hr, is 80% or more. The tensile elongation retention can be exemplified as a more preferable range of 90% or more. The tensile elongation retention refers to the ratio of the tensile elongation after the immersion treatment to the tensile elongation before the immersion treatment of a test piece obtained by injection molding the polyphenylene sulfide resin composition in LLC.

The method for producing the polyphenylene sulfide resin composition of the present invention is not particularly limited, and representative examples thereof include a method of supplying a raw material to a known melt kneading machine such as an uniaxial or biaxial extruder, a Banbury mixer, a kneader, or a mixing roll, and melt kneading the raw material such that the resin temperature is +5°C to 100°C higher than the melting peak temperature of the (A) PPS resin. Among them, melt kneading by a twin screw extruder is preferable. The resin temperature here is a value obtained by directly measuring the temperature of the resin discharged from the extruder or the temperature of the tip end of the die.

The ratio (L/D) of the screw length L (mm) to the screw diameter D (mm) of the twin screw extruder is desirably 10 or more, more preferably 20 or more, still more preferably 30 or more. The upper limit of the L/D of the twin screw extruder is usually 60. When L/D is less than 10, kneading is insufficient, and there is a tendency that it is difficult to obtain the above-described desired phase structure in the polyphenylene sulfide resin composition.

At the time of melt kneading, the order of mixing the raw materials is not particularly limited, and any method such as a method of melt kneading all the raw materials by the above method, a method of melt kneading some of the raw materials by the above method, and further blending and melt kneading the rest of the remaining raw materials, or a method of feeding some of the raw materials from the feeding position of the extruder, melt kneading the fed raw materials, and simultaneously mixing the remaining raw materials from the middle of the extruder using a side feeder may be used. When the side feeder is used, from the viewpoint of obtaining an excellent phase structure, it is preferable to select a position where the raw material is supplied such that the reaction between the (B) amino group-containing resin and the (C) epoxy group-containing elastomer or the reaction between the (A) PPS resin and the (C) epoxy group-containing elastomer is appropriately performed. For example, the method for adding the component (X) used in the present invention is not limited, but in order to preferably adjust the reactivity of the (C) epoxy group-containing elastomer, it is particularly preferable to add the component (X) using a side feeder after the (B) amino group-containing resin and

the (C) epoxy group-containing elastomer are supplied from the feeding position and reacted from the viewpoint of appropriate reaction control.

It is preferable to suppress gelation of the extruded gut due to an excessive reaction of the (B) amino group-containing resin and the (C) epoxy group-containing elastomer and a decrease in toughness associated therewith, and as a configuration of a screw for achieving this, it is preferable to use a stirring screw having a notch portion. Here, the "notch" refers to a part obtained by partially cutting a peak part of the screw flight. The stirring screw having the notch portion can increase the resin filling rate. The molten resin is susceptible to the extruder cylinder temperature when passing through the kneading section to which the stirring screw is connected. By using the stirring screw having the notch portion, the molten resin generated by shearing during kneading is efficiently cooled, and thus the resin temperature during kneading can be lowered. In addition, the stirring screw having the notch portion can perform kneading mainly by stirring and mixing unlike the conventional method of grinding the resin, and thus, it is easy to obtain the above-described desired phase structure by suppressing shear heat generation during kneading.

The stirring screw having the notch portion is preferably a stirring screw having a notch portion in which the screw pitch length is in the range of 0.1 D to 0.3 D and the number of notches is 10 to 15 per pitch when the screw diameter is defined as D (mm) from the viewpoint of improving the cooling efficiency of the molten resin by filling with the resin and improving the kneading property. Here, the "screw pitch length" refers to a screw length for a peak part of the screw when the screw rotates 360 degrees.

The stirring type screw having the notch portion is preferably introduced such that the screw length is 3% or more of the total length L (mm) of the screw, and more preferably introduced such that the length is 5% or more. The upper limit is preferably 20% or less, more preferably 15% or less of the total length of the screw.

In addition, as an example of a method for suppressing gelation of the extruded gut due to an excessive reaction of the (B) amino group-containing resin and the (C) epoxy group-containing elastomer and a decrease in toughness associated therewith, a method of lowering the cylinder temperature of the extruder to a temperature lower than the melting point of the (A) PPS resin and melt kneading the resin can be preferably exemplified. As described above, by lowering the cylinder temperature of the extruder to a temperature lower than the melting point of the (A) PPS resin, it is possible to suppress an excessive reaction between the (B) amino group-containing resin and the (C) epoxy group-containing elastomer and to increase the melt viscosity during melt kneading, and thus stirring can be efficiently performed. As a result, the reaction between the (B) amino group-containing resin and the (C) epoxy group-containing elastomer can be efficiently performed, and a phase structure in which the (A) PPS resin forms a continuous phase and the (B) amino group-containing resin and the (C) epoxy group-containing elastomer form a dispersed phase is easily obtained.

Specifically, the cylinder temperature of the extruder can be exemplified as a preferable range of 230°C or higher and 285°C or lower although it cannot be generalized because the cylinder temperature of the extruder depends on the melting point of the (A) PPS resin to be used. In the cylinder block of the extruder, 30 to 80% is preferably in the above temperature range, and 50 to 80% is more preferably in the above temperature range. Furthermore, from the viewpoint of efficiently performing cooling and stirring by the stirring type screw having the notch portion described above, it is particularly preferable to set the cylinder block corresponding to the place where the stirring type screw having the notch portion is incorporated to the above temperature range.

Examples of the method for molding the polyphenylene sulfide resin composition of the present invention include extrusion molding, injection molding, hollow molding, calendar molding, compression molding, vacuum molding, foam molding, blow molding, and rotation molding. In particular, the polyphenylene sulfide resin composition in the present invention is useful for an extrusion molding application or a blow molding application because the take-up property of the molten resin is good and the thickness can be easily controlled.

The polyphenylene sulfide resin composition of the present invention is suitable for many molded articles described in Patent Document 2 (International Publication No. 2018/003700) by utilizing the characteristics of being excellent in toughness, flexibility, heat resistance, and chemical resistance. Among them, the polyphenylene sulfide resin composition of the present invention is useful as a coated molded body of a winding wire for a motor coil of a hybrid vehicle, an electric vehicle, a railway, or a power generation facility, various pipes, ducts, or tubes of a fuel related system, an exhaust system, an intake system, or a cooling system of a vehicle exposed to a high-temperature environment, or a pipe used for a gas water heater, a heat pump water heater, a hot water heater, or the like. Among them, a molded article formed of the resin composition of the present invention is suitable for a hollow molded article having a shape in which assemblability and vibration absorbability are easily exhibited by utilizing the characteristic of excellent flexibility. In particular, a molded article formed of the resin composition of the present invention is excellent in chemical resistance as compared with a polyamide resin, and thus is also useful for being used as a pipe which is in contact with cooling water for automobile containing ethylene glycol as a main component, which is used for cooling an engine or a motor of an automobile. The molded article formed of the resin composition of the present invention has less elution of metal ions as compared with a rubber pipe reinforced with glass fiber or the like, and thus is also useful as a cooling pipe for a fuel cell vehicle.

EXAMPLES

Hereinafter, the effects of the present invention will be described more specifically with reference to examples, but the present invention is not limited to these examples. The evaluation in each of Examples and Comparative Examples was performed by the following method.

(1) Injection molding

For the resin composition pellets obtained in each of Examples and Comparative Examples, an ISO (1A) dumbbell test piece was injection-molded at a cylinder temperature of 310°C and a mold temperature of 140°C using an injection molding machine SE75-DUZ manufactured by Sumitomo Heavy Industries, Ltd.

(2) Initial mechanical characteristics

Tensile properties of the injection-molded ISO (1A) dumbbell test piece were evaluated under conditions of a distance between fulcrums of 114 mm and a tensile rate of 50 mm/min according to ISO 527-1 and 527-2 (2012) using a Tensilon UTA 2.5T tensile tester at a temperature of 23°C. Subsequently, according to ISO 178 (2010), the bending characteristics were evaluated under the conditions of a distance between fulcrums of 64 mm and a speed of 2 mm/min.

(3) Mechanical characteristics (heat aging resistance) after 170°C × 1000 hr durability treatment

The injection-molded ISO (1A) dumbbell test piece was treated in a PHH 202 hot air dryer manufactured by ESPEC CORP. heated to a temperature of 170°C for 1000 hours, and then cooled at room temperature for 24 hours. This treatment is called durability treatment.

Next, using the Tensilon UTA 2.5 T tensile tester at a temperature of 23°C, the tensile properties of the dumbbell test piece after the durability treatment were evaluated under the conditions of a distance between fulcrums of 114 mm and a tensile rate of 50 mm/min according to ISO 527-1 and 527-2 (2012). The ratio of the tensile elongation after 170°C × 1000 hr durability treatment to the initial tensile elongation was defined as a tensile elongation retention (%).

(4) Mechanical characteristics (chemical resistance) after immersion treatment in LLC at 150°C × 1000 hr

The injection-molded ISO (1A) dumbbell test piece was completely immersed in a liquid obtained by mixing commercially available LLC (Toyota Super Long Life Coolant (product number 08889-01005) manufactured by Toyota Motor Corporation) and ion-exchanged water at a mass ratio of 1:1 under the condition of 150°C × 1000 hr, and then cooled at room temperature for 24 hours. This treatment is referred to as LLC immersion treatment.

Next, using the Tensilon UTA 2.5 T tensile tester at a temperature of 23°C, the tensile properties of the dumbbell test piece after the immersion were evaluated under the conditions of a distance between fulcrums of 114 mm and a tensile rate of 50 mm/min according to ISO 527-1 and 527-2 (2012). The ratio of the tensile elongation after the LLC immersion treatment to the initial tensile elongation was defined as a tensile elongation retention (%).

(5) Number average dispersed particle size of dispersed phase and secondary dispersed phase in dispersed phase

The center portion of the injection-molded ISO (1A) dumbbell test piece was cut in a direction perpendicular to the flow direction of the resin, and a thin piece having a thickness of 0.1 um or less was cut from the central portion of the cross section under the condition of a temperature of -20°C using an ultramicrotome. Thereafter, a sample in which the thin piece was stained with ruthenium tetroxide and an unstained sample were prepared. Using an H-7100 transmission electron microscope (resolution (particle image) 0.38 nm, magnification 500000 to 600000 times) manufactured by Hitachi, Ltd., photographs were taken at random 10 places of these samples at a magnification of 1000 to 10000 times. Using image analysis software "Scion Image" manufactured by Scion Corporation, 10 random different dispersed particles were selected for the dispersed particles of each component present in the electron micrograph, the major diameter and minor diameter of each dispersed phase were determined, the average value was obtained, and the number average value of the average values was taken as the number average dispersed particle size. In addition, the identification of the components constituting the dispersed phase was determined by comparing a phase contrast difference in an unstained sample with a phase contrast difference in a sample stained with ruthenium tetroxide.

(6) Melt viscosity measurement, residual viscosity increase rate measurement

The resin composition pellets obtained in each of Examples and Comparative Examples were retained at a

temperature of 300°C for 5 minutes using Capilograph (registered trademark) manufactured by TOYO SEIKI SEISAKU-SHO, LTD, and then the melt viscosity (V5) was measured under the conditions of a temperature of 300°C, a shear rate of 122/s, a capillary length of 10 mm, and a capillary diameter of 1 mm. Subsequently, after retention at a temperature of 300°C for 25 minutes (after retention for 30 minutes in total), the same measurement was performed, the melt viscosity (V30) was measured, and the residual viscosity increase rate was determined from the following formula.

$$\text{Residual viscosity increase rate (\%)} = ((V30 - V5)/V5) \times 100.$$

(7) Measurement of take-up speed at break

For the resin composition pellets obtained in each of Examples and Comparative Examples, using Capilograph (registered trademark) manufactured by TOYO SEIKI SEISAKU-SHO, LTD, the resin composition pellets were retained at a test temperature of 300°C for 5 minutes, the strands were then taken up under the conditions of a capillary length of 10 mm, a capillary diameter of 1 mm, an extrusion speed of 50 mm/min, a distance between die and pulley of 350 mm, and a take-up speed of 10 m/min, and when the take-up speed was increased at an acceleration of 380 m/min$^2$, the take-up speed when the strands were broken was defined as the take-up speed at break. Subsequently, after retention at a temperature of 300°C for 25 minutes (after retention for 30 minutes in total), the same measurement was performed to determine the take-up speed at break after retention.

(8) Blow moldability

The resin composition pellets obtained in each of Examples and Comparative Examples were subjected to a blow molding machine, and a hollow body having a thickness of 2 mm, an outer diameter of 40 mm, and a length of 200 mm was molded under the conditions of a cylinder temperature of 320°C and a mold temperature of 60°C. At this time, the blow moldability was evaluated as follows.

best: A molded article having almost no thickness deviation was obtained.
good: A molded article was obtained, but thickness deviation occurred.
bad: A drawdown of the parison occurred and could not be molded.

(9) Extrusion moldability

Resin composition pellets obtained in each of Examples and Comparative Examples were molded under the conditions of the following 1 to 3 at a cylinder temperature of 300°C using an extruder equipped with a vacuum water tank to obtain a hollow body having an outer diameter of 18 mm and a length of 100 mm.

Condition 1: Screw rotation speed: 40 rpm, take-up speed: 2 m/min
Condition 2: Screw rotation speed: 40 rpm, take-up speed: 5 m/min
Condition 3: Screw rotation speed: 20 rpm, take-up speed: 5 m/min

At this time, the extrusion moldability was evaluated as follows.

best: Molding is possible under all conditions.
better: Molding was possible under Conditions 1 and 2, but tube breakage occurred under Condition 3.
good: Molding was possible under Condition 1, but tube breakage occurred under Conditions 2 and 3.
bad: Tube breakage occurred in all conditions.

Thereafter, for the resin composition of which extrusion moldability was "best" and "better" results, a hollow body having a thickness of 2 mm, an outer diameter of 18 mm, and a length of 100 mm was molded by randomly adjusting the screw rotation speed under the conditions of a cylinder temperature of 300°C and a take-up speed of 5 m/min.

(10) Fitting test into nipple

In the item (9), a hollow molded body having a thickness of 2.0 mm, an outer diameter of 18 mm, and a length of 100 mm obtained under the condition of a take-up speed of 5 m/min was treated under each of the following Conditions

1 to 3.

Condition 1: After molding, the hollow molded body was allowed to cool at room temperature.
Condition 2: The hollow molded body was treated in a PHH 202 hot air dryer manufactured by ESPEC CORP. heated to 170°C for 1000 hours, and then cooled at room temperature for 24 hours.
Condition 3: The hollow molded body was completely immersed in a liquid obtained by mixing commercially available LLC (Toyota Super Long Life Coolant (product number 08889-01005) manufactured by Toyota Motor Corporation) and ion-exchanged water at a mass ratio of 1:1 under the condition of 150°C × 1000 hr, and then cooled at room temperature for 24 hours.

Thereafter, for the hollow molded body treated under each condition, the hollow molded body was pushed by 15 mm at a speed of 500 mm/min from the top into a nipple fixed with a jig using an autograph tester, and the presence or absence of cracks of the hollow molded body was confirmed and evaluated as follows.

best: Insertion was possible without cracks under all conditions.
better: Insertion was possible without cracks under Condition 1, but cracks occurred under Conditions 2 and 3.
good: Insertion was possible, but cracks occurred in all conditions.
bad: The molded body was hard and could not be inserted into the nipple.

The shape of the nipple to be used is a hose nipple, and the maximum outer diameter at the connection portion of the nipple is 17 mm.

Raw materials used in Examples and Comparative Examples are shown below.

[Reference Example 1] (A) PPS resin: A-1

To a 70 liter autoclave with a stirrer and a bottom valve, 8.27 kg (70.00 mol) of 47.5% sodium hydrosulfide, 2.94 kg (70.63 mol) of 96% sodium hydroxide, 11.45 kg (115.50 mol) of N-methyl-2-pyrrolidone (NMP), 2.24 kg (27.3 mol) of sodium acetate, and 5.50 kg of ion-exchanged water were charged, and gradually heated to 245°C over about 3 hours while nitrogen was passed at normal pressure, 9.77 kg of water and 0.28 kg of NMP were distilled off, and then a reaction vessel was cooled to 200°C. The amount of water remaining in the system per 1 mol of the charged alkali metal sulfide was 1.06 mol including water consumed for hydrolysis of NMP. The scattered amount of hydrogen sulfide was 0.02 mol per 1 mol of the charged alkali metal sulfide.

Thereafter, the reaction vessel was cooled to 200°C, 10.32 kg (70.20 mol) of p-dichlorobenzene and 9.37 kg (94.50 mol) of NMP were added, the reaction vessel was sealed under nitrogen gas, the temperature was raised from 200°C to 235°C at a rate of 0.8°C/min with stirring at 240 rpm, and the reaction was carried out at 235°C for 40 minutes. Thereafter, the mixture was heated to 270°C at a rate of 0.8°C/min, reacted at 270°C for 70 minutes, and then 2.40 kg (133 mol) of water was press-fitted thereto while cooling the mixture from 270°C to 250°C over 15 minutes. Then, the mixture was gradually cooled from 250°C to 220°C over 75 minutes, and then rapidly cooled to around room temperature, and the contents were taken out.

The contents were diluted with about 35 liters of NMP, stirred as a slurry at 85°C for 30 minutes, and then filtered off with an 80 mesh wire mesh (mesh opening: 0.175 mm) to obtain a solid. The obtained solid was washed with about 35 liters of NMP and filtered off in the same manner. An operation of diluting the obtained solid to 70 liters of ion-exchanged water, stirring the mixture at 70°C for 30 minutes, and then filtering the mixture with an 80 mesh wire mesh to recover the solid was repeated 3 times in total. The obtained solid and 32 g of acetic acid were diluted with 70 liters of ion-exchanged water, stirred at 70°C for 30 minutes, and then filtered with a 80 mesh wire mesh, and further the obtained solid was diluted with 70 liters of ion-exchanged water, stirred at 70°C for 30 minutes, and then filtered with a 80 mesh wire mesh to recover the solid. The solid obtained in this manner was dried at 120°C under nitrogen flow to obtain a dried PPS. The PPS resin produced by such a method was designated as A-1. The obtained PPS resin contained 50 ppm of sodium. Further, after retention at a test temperature of 300°C for 5 minutes, the melt viscosity obtained at a shear rate of 1216/s was 170 Pa·s.

[Reference Example 2] (A) PPS resin: A-2

Polymerization and washing were performed in the same manner as in Reference Example 1 except that calcium acetate was used instead of acetic acid at the time of washing. The PPS resin produced by such a method was designated as A-2. The obtained PPS resin contained 500 ppm of calcium. Further, after retention at a test temperature of 300°C for 5 minutes, the melt viscosity obtained at a shear rate of 1216/s was 230 Pa·s.

(B) Amino group-containing resin

B-1: Nylon 610 (AMILAN (registered trademark) manufactured by Toray Industries) having a relative viscosity (the measurement was performed in a 98% concentrated sulfuric acid solution (1 g polymer, 100 ml concentrated sulfuric acid) at 25°C.) of 2.7 was used.
B-2: Nylon 12 ("Rilsamide" AESNO TL manufactured by Arkema S.A.) was used.
B-3: An amine-modified styrene-butylene/butadienestyrene block copolymer ("Tuftec (registered trademark)" MP 10 manufactured by Asahi Kasei Corporation) was used.

(C) Epoxy group-containing elastomer

C-1: An ethylene-glycidyl methacrylate copolymer ("BONDFAST (registered trademark)" 7M manufactured by Sumitomo Chemical Company, Limited) having a glycidyl methacrylate copolymerization amount of 6% by mass was used.

(D) Elastomer not containing functional group

D-1: An ethylene-1-butene copolymer ("TAFMER (registered trademark)" TX -610 manufactured by Mitsui Chemicals Inc.) was used.
(X) At least one compound having a molecular weight of 1000 or less and selected from among carboxylic acids and carboxylic anhydrides (hereinafter may be abbreviated as component (X))
X-1: Pyromellitic acid (manufactured by Tokyo Chemical Industry Co., Ltd., molecular weight 254 g/mol) was used.
X-2: Pyromellitic anhydride (manufactured by Tokyo Chemical Industry Co., Ltd., molecular weight 218 g/mol) was used.
X-3: 4,4'-oxydiphthalic anhydride (manufactured by Tokyo Chemical Industry Co., Ltd., molecular weight 310 g/mol) was used.
X-4: 3,3',4,4'-benzophenone tetracarboxylic dianhydride (manufactured by Tokyo Chemical Industry Co., Ltd., molecular weight 322 g/mol) was used.
X-5: 3,3',4,4'-biphenyltetracarboxylic dianhydride (manufactured by Tokyo Chemical Industry Co., Ltd., molecular weight 294 g/mol) was used.
X-6: Terephthalic acid (manufactured by Tokyo Chemical Industry Co., Ltd., molecular weight 166 g/mol) as a dicarboxylic acid compound was used.
X-7: 2-Naphthoic acid (manufactured by Tokyo Chemical Industry Co., Ltd., molecular weight 172 g/mol) as a monocarboxylic acid compound was used.

[Examples 1 and 2, Comparative Examples 1 to 5] (Case of batch feeding)

Each raw material was dry-blended at a ratio shown in Table 1, and then all the raw materials were collectively charged from a feeding position of TEX30$\alpha$ type twin screw extruder (L/D = 45, 0% of ratio of screws having 3 kneading sections and notch portions)) manufactured by The Japan Steel Works Ltd. equipped with a vacuum vent, and melt-kneaded at a cylinder temperature shown in Table 1 at a screw rotation speed of 300 rpm. The strand discharged from the tip end of the extruder was pelletized by a strand cutter. Thereafter, the pellets dried at 120°C overnight were subjected to various characteristic evaluations by the methods described above, and then subjected to a blow moldability, an extrusion moldability, and a fitting test into a nipple by the methods described above.

[Examples 3 to 15] (Case of using side feed)

As a raw material blend for a side feed, 20 parts by mass of 100 parts by mass of (A) polyphenylene sulfide resin and the component (X) were dry-blended at a ratio shown in Tables 2 to 4. Next, as a raw material blend for main feed, 80 parts by mass of 100 parts by mass of (A) polyphenylene sulfide resin and other raw materials were dry-blended at a ratio shown in Tables 2 to 4. Then, the raw material blend for main feed was charged into the TEX30$\alpha$ type twin screw extruder (L/D = 45) manufactured by The Japan Steel Works Ltd. equipped with a vacuum vent from the feeding position, and the raw material blend for side feed was charged using a side feeder manufactured by The Japan Steel Works Ltd., and melt-kneaded at a cylinder temperature and a screw rotation speed of 300 rpm in a screw arrangement

shown in Tables 2 to 4. The strand discharged from the tip end of the extruder was pelletized by a strand cutter. In the table, the "normal" screw arrangement is an arrangement with 0% of ratio of screws having 3 kneading sections and notch portions. In addition, the "notch" screw arrangement is an arrangement with 10% of ratio of screws having 3 kneading sections and notch portions. Thereafter, the pellets dried at 120°C overnight were subjected to various characteristic evaluations by the methods described above, and then subjected to a blow moldability, an extrusion moldability, and a fitting test into a nipple by the methods described above.

[Table 1-1]

| Composition | | | Comparative Example 1 | Comparative Example 2 | Comparative Example 3 | Comparative Example 4 |
|---|---|---|---|---|---|---|
| (A) Polyphenylene sulfide resin | | Type | A-1 | A-1 | A-1 | A-1 |
| | | Partby mass | 100 | 100 | 100 | 100 |
| (B) Amino group-containing resin | | Type | | | B-1 | B-1 |
| | | Partby mass | | | 36 | 36 |
| (C) Epoxy group-containing elastomer | | Type | C-1 | C-1 | C-1 | C-1 |
| | | Partby mass | 33 | 82 | 45 | 45 |
| (D) Elastomer not containing functional group | | Type | | | | |
| | | Partby mass | | | | |
| (X) Component | | Type | | | | |
| | | Partby mass | | | | |
| Ratio of (A) when total of (A) to (C) is 100% by mass | | % by mass | 75 | 55 | 55 | 55 |
| Ratio of elastomer (C) + (D) when total of components (A) to (C) and elastomers blended other than component (C) is taken as 100% by mass | | % by mass | 25 | 45 | 25 | 25 |
| Melt kneading conditions | Cylinder temperature | °c | 300 | 300 | 300 | 230 |
| | Screw arrangement | | Normal | Normal | Normal | Normal |
| | Resin temperature | °C | 330 | 330 | 350 | 320 |
| | Addition method | | Batch | Batch | Batch | Batch |

(continued)

| Composition | | | | Comparative Example 1 | Comparative Example 2 | Comparative Example 3 | Comparative Example 4 |
|---|---|---|---|---|---|---|---|
| Rheological properties | Melt viscosity (V5) | | Pa s | 1200 | 2300 | 1900 | 1240 |
| | Melt viscosity (V30) | | Pa s | 1750 | 4000 | 2200 | 2230 |
| | Residual viscosity increase rate | | % | 46 | 74 | 16 | 80 |
| | Take-up speed at break | | m/min | 53 | 15 | 10 | 30 |
| | Take-up speed at break after retention | | m/min | 45 | 5 | 3 | 16 |
| Morphology | Continuous phase | Component | | (A) | (C) | Co-continuance of (A) and (B) | (A) |
| | Primary dispersed phase (B) | Number average dispersed particle size | nm | - | - | 2200 | 900 |
| | Primary dispersed phase (C) | Number average dispersed particle size | nm | 500 | - | 1400 | 700 |
| | Primary dispersed phase (D) | Number average dispersed particle size | nm | - | - | - | - |
| | Secondary dispersed phase (B) in primary dispersed phase (C) | Number average dispersed particle size | nm | - | - | 1000 | 500 |
| Mechanical properties | Initial stage | Tensile elongation | % | 27 | 120 | 40 | 71 |
| | | Flexural strength | MPa | 62 | 15 | 52 | 52 |
| | | Flexural modulus | MPa | 1700 | 400 | 1380 | 1360 |
| | After treatment at 170°C for 1000 hr | Tensile elongation | % | 18 | 3 | 5 | 53 |
| | | Tensile elongation retention | % | 67 | 3 | 13 | 75 |
| | After immersion in LLC at 150°C for 1000 hr | Tensile elongation | % | 26 | 25 | 11 | 68 |
| | | Tensile elongation retention | % | 96 | 21 | 28 | 96 |
| Blow moldability | | | | bad | bad | bad | good |

(continued)

| Composition | | Comparative Example 1 | Comparative Example 2 | Comparative Example 3 | Comparative Example 4 |
|---|---|---|---|---|---|
| Extrusion moldability | | good | bad | bad | bad |
| Fitting test into nipple | | bad | - | - | - |

[Table 1-2]

| Composition | | | | Comparative Example 5 | Example 1 | Example 2 |
|---|---|---|---|---|---|---|
| (A) Polyphenylene sulfide resin | | | Type | A-1 | A-1 | A-1 |
| | | | Partby mass | 100 | 100 | 100 |
| (B) Amino group-containing resin | | | Type | B-1 | B-1 | B-1 |
| | | | Partby mass | 44 | 36 | 44 |
| (C) Epoxy group-containing elastomer | | | Type | C-1 | C-1 | C-1 |
| | | | Partby mass | 55 | 45 | 55 |
| (D) Elastomer not containing functional group | | | Type | D-1 | | D-1 |
| | | | Partby mass | 22 | | 22 |
| (X) Component | | | Type | | X-1 | X-1 |
| | | | Partby mass | | 0.5 | 0.5 |
| Ratio of (A) when total of (A) to (C) is 100% by mass | | | % by mass | 50 | 55 | 50 |
| Ratio of elastomer (C) + (D) when total of components (A) to (C) and elastomers blended other than component (C) is taken as 100% by mass | | | % by mass | 35 | 25 | 35 |
| Melt kneading conditions | Cylinder temperature | | °C | 230 | 230 | 230 |
| | Screw arrangement | | | Normal | Normal | Normal |
| | Resin temperature | | °C | 320 | 320 | 320 |
| | Addition method | | | Batch | Batch | Batch |
| Rheological properties | Melt viscosity (V5) | | Pa ·s | 1630 | 920 | 1120 |
| | Melt viscosity (V30) | | Pa ·s | 2950 | 1280 | 1540 |
| | Residual viscosity increase rate | | % | 81 | 39 | 38 |
| | Take-up speed at break | | m/min | 25 | 130 | 111 |
| | Take-up speed at break after retention | | m/min | 13 | 95 | 85 |
| Morphology | Continuous phase | Component | | (A) | (A) | (A) |
| | Primary dispersed phase (B) | Number average dispersed particle size | nm | 750 | 1000 | 600 |
| | Primary dispersed phase (C) | Number average dispersed particle size | nm | 800 | 700 | 700 |
| | Primary dispersed phase (D) | Number average dispersed particle size | nm | 300 | - | 300 |
| | Secondary dispersed phase (B) in primary dispersed phase (C) | Number average dispersed particle size | nm | 400 | 450 | 400 |

(continued)

| Composition | | | | Comparative Example 5 | Example 1 | Example 2 |
|---|---|---|---|---|---|---|
| Mechanical properties | Initial stage | Tensile elongation | % | 81 | 60 | 75 |
| | | Flexural strength | MPa | 40 | 53 | 45 |
| | | Flexural modulus | MPa | 1140 | 1400 | 1150 |
| | After treatment at 170°C for 1000 hr | Tensile elongation | % | 62 | 50 | 54 |
| | | Tensile elongation retention | % | 77 | 83 | 72 |
| | After immersion in LLC at 150°C for 1000 hr | Tensile elongation | % | 78 | 58 | 70 |
| | | Tensile elongation retention | % | 96 | 97 | 93 |
| Blow moldability | | | | best | good | good |
| Extrusion moldability | | | | bad | best | best |
| Fitting test into nipple | | | | - | better | best |

The results of Examples and Comparative Examples in Table 1 above will be compared and described focusing on the composition.

In Comparative Example 1, although the (A) PPS resin formed a continuous phase, the amount of the (A) PPS resin was large, and thus the flexural modulus exceeded 1500 MPa, and the flexibility was insufficient. Therefore, insertion in the fitting test into the nipple was not possible.

In Comparative Example 2, the amount of the (A) PPS resin was small, the (C) epoxy group-containing elastomer formed a continuous phase, and thus the heat aging resistance represented by the tensile elongation retention after the treatment at 170°C for 1000 hours significantly deteriorated. In addition, the take-up speed at break was low, and various types of poor moldability were remarkable.

In Comparative Example 3, since the melt kneading of the (A) PPS resin, the (B) amino group-containing resin, and the (C) epoxy group-containing elastomer was performed at a high cylinder temperature and a high resin temperature, an excessive reaction occurred, the (A) PPS resin could not form a continuous phase, the take-up speed at break was low, and various types of poor moldability were remarkable.

In Comparative Examples 4 and 5, as a result of forming a continuous phase although the amount of the (A) PPS resin was small, excellent flexibility, heat aging resistance, and chemical resistance could be all achieved, but since the component (X) was not added, the take-up speed at break was low, the residual viscosity increase rate was high, and accordingly, poor extrusion moldability was remarkable.

In Examples 1 and 2, as a result of adding the component (X), the molded article had excellent flexibility, heat aging resistance, and chemical resistance, had excellent take-up speed at break, had a low residual viscosity increase rate, and exhibited good extrusion moldability, and cracks of the molded article did not occur in the fitting test into the nipple.

[Table 2]

| Composition | | Example 2 | Example 3 | Example 4 | Example 5 |
|---|---|---|---|---|---|
| (A) Polyphenylene sulfide resin | Type | A-1 | A-1 | A-1 | A-1 |
| | Part by mass | 100 | 100 | 100 | 100 |

(continued)

| Composition | | | | Example 2 | Example 3 | Example 4 | Example 5 |
|---|---|---|---|---|---|---|---|
| (B) Amino group-containing resin | | | Type | B-1 | B-1 | B-1 | B-1 |
| | | | Partby mass | 44 | 44 | 44 | 44 |
| (C) Epoxy group-containing elastomer | | | Type | C-1 | C-1 | C-1 | C-1 |
| | | | Partby mass | 55 | 55 | 55 | 55 |
| (D) Elastomer not containing functional group | | | Type | D-1 | D-1 | D-1 | D-1 |
| | | | Partby mass | 22 | 22 | 22 | 22 |
| (X) Component | | | Type | X-1 | X-1 | X-1 | X-1 |
| | | | Partby mass | 0.5 | 0.5 | 0.5 | 0.5 |
| Ratio of (A) when total of (A) to (C) is 100% by mass | | | % by mass | 50 | 50 | 50 | 50 |
| Ratio of elastomer (C) + (D) when total of components (A) to (C) and elastomers blended other than component (C) is taken as 100% by mass | | | % by mass | 35 | 35 | 35 | 35 |
| Melt kneading conditions | Cylinder temperature | | °C | 230 | 230 | 260 | 260 |
| | Screw arrangement | | | Normal | Normal | Normal | Notch |
| | Resin temperature | | °C | 320 | 320 | 340 | 320 |
| | Addition method | | | Batch | Side | Side | Side |
| Rheological properties | Melt viscosity (V5) | | Pa · s | 1120 | 1460 | 1710 | 1550 |
| | Melt viscosity (V30) | | Pa · s | 1540 | 1910 | 2070 | 1820 |
| | Residual viscosity increase rate | | % | 38 | 31 | 21 | 17 |
| | Take-up speed at break | | m/min | 111 | 143 | 156 | 155 |
| | Take-up speed at break after retention | | m/min | 85 | 122 | 130 | 134 |
| Morphology | Continuous phase | Component | | (A) | (A) | (A) | (A) |
| | Primary dispersed phase (B) | Numberaverage dispersed particle size | nm | 600 | 400 | 300 | 350 |
| | Primary dispersed phase (C) | Numberaverage dispersed particle size | nm | 700 | 500 | 450 | 500 |
| | Primary dispersed phase (D) | Numberaverage dispersed particle size | nm | 300 | 300 | 200 | 200 |
| | Secondary dispersed phase (B) in primary dispersed phase (C) | Numberaverage dispersed particle size | nm | 400 | 300 | 250 | 200 |

(continued)

| Composition | | | | Example 2 | Example 3 | Example 4 | Example 5 |
|---|---|---|---|---|---|---|---|
| Mechanical properties | Initial stage | Tensile elongation | % | 75 | 85 | 98 | 105 |
| | | Flexural strength | MPa | 45 | 40 | 41 | 41 |
| | | Flexural modulus | MPa | 1150 | 1090 | 1100 | 1100 |
| | After treatment at 170°C for 1000 hr | Tensile elongation | % | 54 | 60 | 65 | 65 |
| | | Tensile elongation retention | % | 72 | 71 | 66 | 62 |
| | After immersion in LLC at 150°C for 1000 hr | Tensile elongation | % | 70 | 80 | 97 | 96 |
| | | Tensile elongation retention | % | 93 | 94 | 99 | 91 |
| Blow moldability | | | | good | best | best | best |
| Extrusion moldability | | | | best | best | best | best |
| Fitting test into nipple | | | | best | best | best | best |

Focusing on the production method, the results of Examples in Table 2 will be compared and described.

In Example 3, as a result of adding the component (X) by side feed as compared with Example 2, the reaction between the (B) amino group-containing resin and the (C) epoxy group-containing elastomer sufficiently proceeded, the melt viscosity could be increased while maintaining an excellent take-up speed at break and a low residual viscosity, and excellent blow moldability was obtained in addition to excellent extrusion moldability.

In Examples 4 and 5, the tensile elongation as an initial mechanical property was improved by preferably changing the cylinder temperature and the screw arrangement as compared with Example 3.

[Table 3]

| Composition | | Example 3 | Example 6 | Example 7 | Example 8 |
|---|---|---|---|---|---|
| (A) Polyphenylene sulfide resin | Type | A-1 | A-2 | A-1 | A-1 |
| | Partby mass | 100 | 100 | 100 | 100 |
| (B) Amino group-containing resin | Type | B-1 | B-1 | B-2 | B-3 |
| | Partby mass | 44 | 44 | 44 | 38 |
| (C) Epoxy group-containing elastomer | Type | C-1 | C-1 | C-1 | C-1 |
| | Partby mass | 55 | 55 | 55 | 55 |
| (D) Elastomer not containing functional group | Type | D-1 | D-1 | D-1 | D-1 |
| | Partby mass | 22 | 22 | 22 | 22 |

(continued)

| Composition | | | | Example 3 | Example 6 | Example 7 | Example 8 |
|---|---|---|---|---|---|---|---|
| (X) Component | | | Type | X-1 | X-1 | X-1 | X-1 |
| | | | Partby mass | 0.5 | 0.5 | 0.5 | 0.5 |
| Ratio of (A) when total of (A) to (C) is 100% by mass | | | % by mass | 50 | 50 | 50 | 52 |
| Ratio of elastomer (C) + (D) when total of components (A) to (C) and elastomers blended other than component (C) is taken as 100% by mass | | | % by mass | 35 | 35 | 35 | 54 |
| Melt kneading conditions | Cylinder temperature | | °C | 230 | 230 | 230 | 230 |
| | Screw arrangement | | | Normal | Normal | Normal | Normal |
| | Resin temperature | | °C | 320 | 320 | 320 | 320 |
| | Addition method | | | Side | Side | Side | Side |
| Rheological properties | Melt viscosity (V5) | | Pa · s | 1460 | 1750 | 1820 | 1690 |
| | Melt viscosity (V30) | | Pa · s | 1910 | 2290 | 2400 | 1770 |
| | Residual viscosity increase rate | | % | 31 | 31 | 32 | 5 |
| | Take-up speed at break | | m/min | 143 | 107 | 116 | 81 |
| | Take-up speed at break after retention | | m/min | 122 | 86 | 80 | 60 |
| Morphology | Continuous phase | Component | | (A) | (A) | (A) | (A) |
| | Primary dispersed phase (B) | Number average dispersed particle size | nm | 400 | 500 | 600 | Co-continuance of (B) and (C) |
| | Primary dispersed phase (C) | Number average dispersed particle size | nm | 500 | 800 | 600 | |
| | Primary dispersed phase (D) | Number average dispersed particle size | nm | 300 | 500 | 400 | 400 |
| | Secondary dispersed phase (B) in primary dispersed phase (C) | Number average dispersed particle size | nm | 300 | 400 | 450 | - |

(continued)

| Composition | | | | Example 3 | Example 6 | Example 7 | Example 8 |
|---|---|---|---|---|---|---|---|
| Mechanical properties | Initial stage | Tensile elongation | % | 85 | 71 | 92 | 96 |
| | | Flexural strength | MPa | 40 | 39 | 35 | 16 |
| | | Flexural modulus | MPa | 1090 | 1080 | 980 | 500 |
| | After treatment at 170°C for 1000 hr | Tensile elongation | % | 60 | 50 | 61 | 72 |
| | | Tensile elongation retention | % | 71 | 70 | 66 | 75 |
| | After immersion in LLC at 150°C for 1000 hr | Tensile elongation | % | 80 | 66 | 80 | 86 |
| | | Tensile elongation retention | % | 94 | 93 | 87 | 90 |
| Blow moldability | | | | best | best | best | best |
| Extrusion moldability | | | | best | best | best | best |
| Fitting test into nipple | | | | best | best | best | best |

Focusing on the type of the used polymer, the results of Examples in Table 3 will be compared and described.

In Examples 6 and 7, even when the type of the (A) PPS resin and the type of the (B) amino group-containing resin were changed, excellent characteristics were obtained as in Example 3.

In Example 8, flexibility was dramatically improved by using a diene-based copolymer as the (B) amino group-containing resin.

[Table 4-1]

| Composition | | | Example 3 | Example 9 | Example 10 | Example 11 | Example 12 |
|---|---|---|---|---|---|---|---|
| (A) Polyphenylene sulfide resin | | Type | A-1 | A-1 | A-1 | A-1 | A-1 |
| | | Partby mass | 100 | 100 | 100 | 100 | 100 |
| (B) Amino group-containing resin | | Type | B-1 | B-1 | B-1 | B-1 | B-1 |
| | | Partby mass | 44 | 44 | 44 | 44 | 44 |
| (C) Epoxy group-containing elastomer | | Type | C-1 | C-1 | C-1 | C-1 | C-1 |
| | | Partby mass | 55 | 55 | 55 | 55 | 55 |
| (D) Elastomer not containing functional group | | Type | D-1 | D-1 | D-1 | D-1 | D-1 |
| | | Partby mass | 22 | 22 | 22 | 22 | 22 |
| (X) Component | | Type | X-1 | X-1 | X-2 | X-3 | X-4 |
| | | Partby mass | 0.5 | 0.9 | 0.5 | 0.5 | 0.5 |
| Ratio of (A) when total of (A) to (C) is 100% by mass | | % by mass | 50 | 50 | 50 | 50 | 50 |
| Ratio of elastomer (C) + (D) when total of components (A) to (C) and elastomers blended other than component (C) is taken as 100% by mass | | % by mass | 35 | 35 | 35 | 35 | 35 |
| Melt kneading conditions | Cylinder temperature | °C | 230 | 230 | 230 | 230 | 230 |
| | Screw arrangement | | Normal | Normal | Normal | Normal | Normal |
| | Resin temperature | °C | 320 | 320 | 320 | 320 | 320 |
| | Addition method | | Side | Side | Side | Side | Side |

(continued)

| Composition | | | | Example 3 | Example 9 | Example 10 | Example 11 | Example 12 |
|---|---|---|---|---|---|---|---|---|
| Rheological properties | Melt viscosity (V5) | | Pa·s | 1460 | 1370 | 1420 | 1400 | 1520 |
| | Melt viscosity (V30) | | Pa·s | 1910 | 1560 | 1830 | 1750 | 1930 |
| | Residual viscosity increase rate | | % | 31 | 14 | 29 | 25 | 27 |
| | Take-up speed at break | | m/min | 143 | 107 | 140 | 138 | 140 |
| | Take-up speed at break after retention | | m/min | 122 | 101 | 120 | 110 | 113 |
| Morphology | Continuous phase | Component | | (A) | (A) | (A) | (A) | (A) |
| | Primary dispersed phase (B) | Number average dispersed particle size | nm | 400 | 650 | 400 | 450 | 400 |
| | Primary dispersed phase (C) | Number average dispersed particle size | nm | 500 | 600 | 500 | 550 | 450 |
| | Primary dispersed phase (D) | Number average dispersed particle size | nm | 300 | 350 | 300 | 300 | 300 |
| | Secondary dispersed phase (B) in primary dispersed phase (C) | Number average dispersed particle size | nm | 300 | 350 | 300 | 350 | 350 |
| Mechanical properties | Initial stage | Tensile elongation | % | 85 | 61 | 81 | 81 | 75 |
| | | Flexural strength | MPa | 40 | 39 | 39 | 40 | 40 |
| | | Flexural modulus | MPa | 1090 | 1050 | 1080 | 1090 | 1080 |
| | After treatment at 170°C for 1000 hr | Tensile elongation | % | 60 | 17 | 58 | 58 | 55 |
| | | Tensile elongation retention | % | 71 | 28 | 72 | 72 | 73 |
| | After immersion in LLC at 150°C for 1000 hr | Tensile elongation | % | 80 | 54 | 75 | 78 | 70 |
| | | Tensile elongation retention | % | 94 | 89 | 93 | 96 | 93 |
| Blow moldability | | | | best | best | best | best | best |
| Extrusion moldability | | | | best | best | best | best | best |
| Fitting test into nipple | | | | best | best | best | best | best |

[Table 4-2]

| Composition | | | Example 13 | Example 14 | Example 15 | Comparative Example 5 |
|---|---|---|---|---|---|---|
| (A) Polyphenylene sulfide resin | | Type | A-1 | A-1 | A-1 | A-1 |
| | | Part by mass | 100 | 100 | 100 | 100 |
| (B) Amino group-containing resin | | Type | B-1 | B-1 | B-1 | B-1 |
| | | Part by mass | 44 | 44 | 44 | 44 |
| (C) Epoxy group-containing elastomer | | Type | C-1 | C-1 | C-1 | C-1 |
| | | Part by mass | 55 | 55 | 55 | 55 |
| (D) Elastomer not containing functional group | | Type | D-1 | D-1 | D-1 | D-1 |
| | | Part by mass | 22 | 22 | 22 | 22 |
| (X) Component | | Type | X-5 | X-6 | X-7 | |
| | | Part by mass | 0.5 | 0.5 | 0.5 | |
| Ratio of (A) when total of (A) to (C) is 100% by mass | | % by mass | 50 | 50 | 50 | 50 |
| Ratio of elastomer (C) + (D) when total of components (A) to (C) and elastomers blended other than component (C) is taken as 100% by mass | | % by mass | 35 | 35 | 35 | 35 |
| Melt kneading conditions | Cylinder temperature | °C | 230 | 230 | 230 | 230 |
| | Screw arrangement | | Normal | Normal | Normal | Normal |
| | Resin temperature | °C | 320 | 320 | 320 | 320 |
| | Addition method | | Side | Side | Side | Batch |
| Rheological properties | Melt viscosity (V5) | Pa·s | 1440 | 900 | 810 | 1630 |
| | Melt viscosity (V30) | Pa·s | 1770 | 1130 | 1100 | 2950 |
| | Residual viscosity increase rate | % | 23 | 26 | 36 | 81 |
| | Take-up speed at break | m/min | 145 | 165 | 85 | 25 |
| | Take-up speed at break after retention | m/min | 120 | 121 | 60 | 13 |

(continued)

| Composition | | | | Example 13 | Example 14 | Example 15 | Comparative Example 5 |
|---|---|---|---|---|---|---|---|
| Morphology | Continuous phase | Component | | (A) | (A) | (A) | (A) |
| | Primary dispersed phase (B) | Number average dispersed particle size | nm | 400 | 2000 | 2500 | 750 |
| | Primary dispersed phase (C) | Number average dispersed particle size | nm | 500 | 800 | 1000 | 800 |
| | Primary dispersed phase (D) | Number average dispersed particle size | nm | 300 | 500 | 600 | 300 |
| | Secondary dispersed phase (B) in primary dispersed phase (C) | Number average dispersed particle size | nm | 300 | - | - | 400 |
| Mechanical properties | Initial stage | Tensile elongation | % | 78 | 35 | 22 | 81 |
| | | Flexural strength | MPa | 40 | 39 | 38 | 40 |
| | | Flexural modulus | MPa | 1070 | 1100 | 1060 | 1140 |
| | After treatment at 170°C for 1000 hr | Tensile elongation | % | 51 | 5 | 4 | 62 |
| | | Tensile elongation retention | % | 65 | 14 | 18 | 77 |
| | After immersion in LLC at 150°C for 1000 hr | Tensile elongation | % | 73 | 10 | 6 | 78 |
| | | Tensile elongation retention | | 94 | 29 | 27 | 96 |
| Blow moldability | | | | best | bad | bad | best |
| Extrusion moldability | | | | best | best | good | bad |
| Fitting test into nipple | | | | best | good | good | - |

The results of Examples and Comparative Examples in Table 4 above will be compared and described focusing on the component (X).

In Examples 9 to 13, even when the type and amount of the component (X) were changed, excellent characteristics were obtained as in Example 3.

On the other hand, in Examples 14 and 15 in which a dicarboxylic acid compound or a monocarboxylic acid compound was added instead of the component (X), as a result of exhibiting an excellent take-up speed at break and a low residual viscosity increase rate as compared with Comparative Example 5, good extrusion moldability was obtained,

but the melt viscosity (V5) was low as compared with Example 3, the number average dispersed particle size of the primary dispersed phase composed of the (B) amino group-containing resin was also large, and the tensile elongation and the heat aging resistance, which are initial mechanical properties, were low. Therefore, all of the blow moldability, the extrusion moldability, and the fitting test into the nipple were inferior to those of Example 3. This is because the reaction between the (B) amino group-containing resin and the (C) epoxy group-containing elastomer was inhibited by the addition of a dicarboxylic acid or a monocarboxylic acid.

**Claims**

1. A polyphenylene sulfide resin composition obtained by blending a (A) polyphenylene sulfide resin, an (B) amino group-containing resin, an (C) epoxy group-containing elastomer, and (X) at least one compound having a molecular weight of 1000 or less and selected from among carboxylic acids and carboxylic anhydrides, wherein

   when the total amount of the (A) polyphenylene sulfide resin, the (B) amino group-containing resin, and the (C) epoxy group-containing elastomer is set to 100% by mass, the amount of the (A) polyphenylene sulfide resin is 20% by mass or more and 60% by mass or less, and
   in the morphology of a molded article made of the polyphenylene sulfide resin composition as observed with a transmission electron microscope, the (A) polyphenylene sulfide resin forms a continuous phase, and the (B) amino group-containing resin and the (C) epoxy group-containing elastomer form a dispersed phase.

2. The polyphenylene sulfide resin composition according to claim 1, wherein the (X) at least one compound having a molecular weight of 1000 or less and selected from among carboxylic acids and carboxylic anhydrides is (X) at least one compound selected from among tetracarboxylic acids and tetracarboxylic dianhydrides.

3. The polyphenylene sulfide resin composition according to claim 1 or 2, wherein the (B) amino group-containing resin is a polyamide resin.

4. The polyphenylene sulfide resin composition according to claim 3, wherein in the dispersed phase, the (B) polyamide resin forms a secondary dispersed phase in the dispersed phase of the (C) epoxy group-containing elastomer.

5. The polyphenylene sulfide resin composition according to claim 1 or 2, wherein the (B) amino group-containing resin is an amino group-containing diene-based copolymer.

6. The polyphenylene sulfide resin composition according to claim 5, wherein the dispersed phase is a dispersed phase having a co-continuous structure of the (C) epoxy group-containing elastomer and the (B) amino group-containing diene-based copolymer.

7. The polyphenylene sulfide resin composition according to any one of claims 1 to 6, wherein an ISO (1A) dumbbell test piece obtained by injection molding the polyphenylene sulfide resin composition has a flexural modulus of 1.0 MPa or more and 1500 MPa or less as measured according to ISO 178 (2010).

8. The polyphenylene sulfide resin composition according to any one of claims 1 to 7, wherein

   a residual viscosity increase rate defined by the following formula is -30% or more and 60% or less;

   $$\text{Residual viscosity increase rate (\%)} = ((V30 - V5)/V5) \times 100\ (\%);$$

   here, V5 and V30 represent a melt viscosity (pa-s) of the polyphenylene sulfide resin composition determined under the condition of a temperature of 300°C and a shear rate of 122/s after retention at 300°C for 5 minutes and 30 minutes, respectively, using a capillary rheometer.

9. The polyphenylene sulfide resin composition according to any one of claims 1 to 8, wherein the polyphenylene sulfide resin composition is a polyphenylene sulfide resin composition for a pipe which is in contact with cooling water for automobiles.

**10.** A molded article containing the polyphenylene sulfide resin composition according to any one of claims 1 to 9.

**11.** The molded article according to claim 10, wherein the molded article is a hollow molded article.

**12.** The molded article according to claim 11, wherein the hollow molded article is a pipe which is in contact with cooling water for automobiles.

**13.** A method for producing a molded article, the method comprising extrusion molding the polyphenylene sulfide resin composition according to any one of claims 1 to 9.

**14.** A method for producing a molded article, the method comprising blow molding the polyphenylene sulfide resin composition according to any one of claims 1 to 9.

## INTERNATIONAL SEARCH REPORT

International application No.
**PCT/JP2022/014331**

**A. CLASSIFICATION OF SUBJECT MATTER**

***F28F 21/06***(2006.01)i; ***C08K 5/1539***(2006.01)i; ***C08L 15/00***(2006.01)i; ***C08L 53/02***(2006.01)i; ***C08L 77/00***(2006.01)i; ***C08L 81/02***(2006.01)i; ***C08L 101/06***(2006.01)i; ***C08L 71/12***(2006.01)i; ***C08J 5/00***(2006.01)i; ***C08G 75/0281***(2016.01)i; ***B29C 48/09***(2019.01)i; ***F16L 11/04***(2006.01)i

FI: C08L71/12; C08L77/00; C08K5/1539; C08G75/0281; F28F21/06; C08L15/00; C08L101/06; C08L53/02; F16L11/04; B29C48/09; C08J5/00 CFG; C08L81/02

According to International Patent Classification (IPC) or to both national classification and IPC

**B. FIELDS SEARCHED**

Minimum documentation searched (classification system followed by classification symbols)

F28F21/06; C08K5/1539; C08L15/00; C08L53/02; C08L77/00; C08L81/02; C08L101/06; C08L71/12; C08J5/00; C08G75/0281; B29C48/09; F16L11/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-56007 A (TORAY INDUSTRIES) 09 April 2020 (2020-04-09) | 1-14 |
| A | JP 2019-108537 A (TORAY INDUSTRIES) 04 July 2019 (2019-07-04) | 1-14 |
| A | JP 2008-87168 A (TORAY INDUSTRIES) 17 April 2008 (2008-04-17) | 1-14 |
| A | JP 2019-6884 A (TORAY INDUSTRIES) 17 January 2019 (2019-01-17) | 1-14 |
| A | JP 3-281660 A (IDEMITSU PETROCHEM CO LTD) 12 December 1991 (1991-12-12) | 1-14 |
| A | JP 2-86653 A (UBE IND LTD) 27 March 1990 (1990-03-27) | 1-14 |
| A | JP 11-228827 A (TORAY INDUSTRIES) 24 August 1999 (1999-08-24) | 1-14 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/014331**

| Patent document cited in search report | Publication date (day/month/year) | Patent family member(s) | Publication date (day/month/year) |
|---|---|---|---|
| JP 2020-56007 A | 09 April 2020 | (Family: none) | |
| JP 2019-108537 A | 04 July 2019 | (Family: none) | |
| JP 2008-87168 A | 17 April 2008 | (Family: none) | |
| JP 2019-6884 A | 17 January 2019 | (Family: none) | |
| JP 3-281660 A | 12 December 1991 | US 6037422 A<br>US 6117950 A<br>EP 424939 A2 | |
| JP 2-86653 A | 27 March 1990 | EP 360544 A2 | |
| JP 11-228827 A | 24 August 1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 199821030 A
- WO 20183700 A
- WO 2018003700 A